# EUROPEAN PATENT APPLICATION

(11) **EP 4 764 876 A1**
(43) Date of publication of application: **24.06.2026**
(21) Application number: 25215634.4
(22) Date of filing: 13.11.2025
(51) Int. Cl.: G06F 13/16, G06F 13/24, H04L 41/0823, H04L 41/40, H04L 43/04, G06F 3/06, G06F 9/50, H04L 41/5019, G06F 12/02, G06F 11/10

(54) **MEMORY RELIABILITY AVAILABILITY AND SERVICEABILITY (RAS) FOR WIRELESS NETWORKS**

(30) Priority: 19.12.2024 US 202418987168
(71) Applicant: Intel Corporation, Santa Clara, CA 95054 (US)
(72) Inventor: RANGANATH, Sunku, Beaverton, 97003 (US); BROWNE, John, Limerick, V94 C44N (IE); MOUSTAFA, Hassnaa, San Jose, 95123 (US); CHINCHOLKAR, Mandar, Portland, 97229 (US); SRIVASTAVA, Amar, 560035 Bangalore (IN)
(74) Representative: Maiwald GmbH

(57) **Abstract**

Memory management for wireless networks is described. A method, includes accessing an operational parameter for a network slice of a wireless network (902), determining a first memory region of a plurality of memory regions in the memory pool based on the operational parameter (904), and encoding configuration information to allocate the first memory region to the network slice (906). Other embodiments are described and claimed.

## Description

### BACKGROUND

Managing interrupts for a computer system directly impacts performance. An interrupt request (IRQ) is a hardware signal sent to a processor that halts a program and allows an interrupt handler to run. Hardware interrupts are used to handle events such as processing packets or data from a network interface, responding to inputs from peripheral interfaces (e.g., keyboard, mouse, or touch screen), and so forth. A hardware interrupt can be sent to the central processing unit (CPU) using a system bus. A software interrupt is a hardware instruction which causes an interrupt processing routine to be invoked. Interrupts can be masked so that particular interrupts are serviced (or not) according to the Interrupt Mask Register (IMR), which contains a single bit (allow or inhibit) for each cause of interrupt. Non-Maskable Interrupts (NMI) are high priority interrupts. A corresponding bit can be set to report which device is requesting an interrupt.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a wireless communications system in accordance with one embodiment.
FIG. 2 illustrates a system in accordance with one embodiment.
FIG. 3 illustrates a wireless network in accordance with one embodiment.
FIG. 4 illustrates a computing system in accordance with one embodiment.
FIG. 5 illustrates a computing system in accordance with one embodiment.
FIG. 6 illustrates a computing system in accordance with one embodiment.
FIG. 7 illustrates a computing system in accordance with one embodiment.
FIG. 8 illustrates a logic diagram in accordance with one embodiment.
FIG. 9 illustrates a logic flow in accordance with one embodiment.
FIG. 10 illustrates a logic flow in accordance with one embodiment.
FIG. 11 illustrates a wireless communications system in accordance with one embodiment.
FIG. 12 illustrates a computing architecture in accordance with one embodiment.
FIG. 13 illustrates a computer readable storage medium in accordance with one embodiment.

### DETAILED DESCRIPTION

Embodiments are generally directed to intelligent resource management for computer systems and infrastructure equipment for various types of networks. Non-limiting examples of networks include a data center network, a cloud computing network, an edge network, a wireless network, a virtualized core network (VCN) for a wireless network, an autonomous driving network, an internet of things (IoT) network, a machine-to-machine (M2M) network, a robotic network, an automation network, a time-sensitive network (TSN), and so forth.

Some embodiments are particularly directed to a novel resource allocation scheme for efficiently and effectively allocating physical resources in a computer system or infrastructure equipment. Efficient resource allocation better supports network services such as virtualization (e.g., virtual networks or virtual machines). In some embodiments, for example, a resource controller implements the resource allocation scheme to dynamically and flexibly allocate memory resources to hardware and software entities in a manner that reduces a number of interrupt requests (or interrupts) generated for memory events, such as memory reliability, availability, and serviceability (RAS) errors. Additionally, or alternatively, some embodiments may implement a memory microcontroller to specifically manage interrupts, diagnose memory events, and take defined actions such as updating resource allocations to reduce or eliminate future memory events and avoid subsequent interrupts. Such embodiments may offload and reduce interrupt handling performed by other computer elements, such as a processor or memory controller. Reducing a number of interrupts in computer systems increases overall network utilization, throughput, and performance. Other embodiments are described and claimed herein.

Some embodiments are particularly directed to techniques for resource allocation suitable for a wireless network, such as a long-term evolution (LTE), fifth generation (5G) new radio (NR), and/or sixth generation (6G) cellular network. A non-limiting example of a 5G or 6G cellular network is a Third Generation Partnership Project (3GPP) system. In a 3GPP system, for example, various network functions (NFs) of a core network (CN) are implemented using logical or virtual networks, often referred to as a "network slice." A network slice is an end-to-end, virtualized logical network partition that operates over a shared physical infrastructure between endpoints, such as user equipment (UE), autonomous vehicles, robots, machine-to-machine (M2M) devices, software agents, or Other wireless devices. Each network slice functions as an independent network tailored to meet specific service requirements by allocating dedicated resources and configuring specialized network functions. This isolation and customization enable service providers to offer differentiated network experiences with unique network characteristics to accommodate the diverse needs of modern applications. Non-limiting examples of network characteristics include providing varying levels of bandwidth, latency, reliability, security, isolation, and performance as defined by service level agreements (SLAs). For instance, one network slice might be optimized for high-throughput enhanced mobile broadband services, another for ultra-reliable low-latency communications essential for critical applications like autonomous vehicles or remote surgery, and yet another for massive machine-type communications connecting a vast number of Internet of Things (IoT) devices. Network slicing leverages advanced technologies like Network Function Virtualization (NFV) and Software-Defined Networking (SDN) to dynamically create, manage, and orchestrate these slices, allowing for flexible and efficient use of network resources while adapting to changing service demands and delivering personalized network capabilities on a common infrastructure.

A network slice is assigned or allocated a certain amount of physical resources in order to meet a given set of performance requirements as defined by one or more operational parameters. For example, a network slice is allocated certain physical resources, such as compute, memory, storage, bandwidth, power, cooling, input/output (I/O), data flows, internet protocol (IP) flows, and so forth. For memory allocation, for example, a hardware entity (e.g., a computer system or device) or a software entity (e.g., an application or operating system) may be allocated memory regions or memory address ranges from a pool of shared memory resources. The memory may be allocated to an entity based on particular services provided by the memory. For example, the services may include error correcting code (ECC) services for reliability, encryption services for privacy, isolation services for security, memory tiering, directory tracking, tenancy services, protocol services, and/or other types of memory-related services.

Over time, memory may fail or otherwise encounter errors, such as memory reliability, availability, and serviceability (RAS) errors. RAS errors can heavily impact performance of a network slice due to an increase in interrupt requests and interrupt handling. An interrupt can cause a processor to halt its operation to handle the interrupt. A machine check exception occurs when there is an error that hardware cannot correct. A machine check exceptions subsystem offers an Operating System (OS) an opportunity to take corrective action. However, a machine check exception will cause a processor (e.g., a central processing unit (CPU)) to interrupt its currently executing program and call a special exception handler. These interrupts are non-maskable (NMI) and neither turning off the interrupt request (IRQ) balance or any of the OS enhancements like CPU isolation, and so forth prevent these interrupts from occurring on all the CPU cores. In some cases, these interrupts cannot be intercepted, and cannot be masked, unlike other interrupts.

For example, when a memory fault is detected (e.g., a memory found a bit error and corrected the error), a processor or an interrupt controller generates an interrupt to be serviced by multiple cores. This causes interruptions to applications running across a system, even when a single core/resource is affected. If these faults occur on multiple resources or a fault occurs multiple times on a single resource, each interrupt has to be addressed across all cores. As a result, cores interrupt normal processing to handle this event. Servicing the memory fault interrupts core operations such as packet processing and other activities of all cores that receive the interrupt. For example, cores dedicated to packet processing or cores dedicated to real-time scheduling stop their operations in order to execute a kernel thread to handle the interrupts. In a NFV and SDN environment, this causes interruptions to all applications, even those that are not directly affected. This can contribute to unacceptable levels of service outage. Stopping and resuming the operation of processing involves time-intensive acts of saving a state of a currently-executing process to a stack, reloading the state, and resuming operation of the process. Accordingly, interrupting a process delays its completion. For example, an OS stops its operations to handle interrupts.

Recurring errors can contribute significantly to performance degradation, even though the same corrective action may be able to address multiple faults. The handling of hardware recoverable faults also effects the determinism of the workload performance. If these interrupts occur on more than one resource, or frequently recur, this can lead to an inability for Communications Service Providers (CoSPs) to meet their strict SLAs concerning workload performance and/or perform effective capacity planning as there can be an increase in performance uncertainty.

Embodiments disclosed herein provide an improved resource allocation scheme for allocating network resources to a hardware or software entity in a network. The resource allocation scheme may include techniques for memory configuration and allocation to support various types of networks, such as cloud computing networks, edge networks, and wireless communications networks, among other types of networks. Memory configuration metadata may be allocated on different ranges of memory addresses of physical memory. Such ranges of physical memory may be spread across multiple elements of physical memory, e.g., multiple elements of physical memory in a memory pool. In cloud computing environments, where different tenants have different memory requirements, embodiments disclosed herein allow each tenant to apply one or more desired memory metadata allocations. For example a first tenant may have stringent security requirements. As such, the memory metadata allocation for the first tenant may allocate more bits to encryption and/or isolation services, with few (or no) bits allocated to ECC. As another example, a second tenant may allocate all metadata bits to ECC coverage to reduce memory errors. Embodiments are not limited in these contexts.

Some embodiments are particularly directed to a resource allocation scheme designed to support network slices of a wireless communications system, such as a 5G or 6G wireless network as defined by 3GPP or other standards. The resource allocation scheme maps operational parameters to memory regions, where the memory regions are differentiated based on memory services, such as memory reliability. The resource allocation scheme allows network slices assigned higher quality of service (QoS) and reliability parameters (e.g., low latency and low packet loss) to be allocated to memory regions offering higher reliability services, thereby reducing the probability of memory events such as RAS errors interrupting key network slice transports. Non-limiting examples of operational parameters are values related to one or more of accessibility, availability, latency, reliability, data rates, data flows, area traffic capacity, integrity, utilization, retainability, mobility, energy efficiency, quality of service, and so forth. The operational parameters may be defined by one or more policies from an orchestration function, key performance measurements (KPMs), key performance indicators (KPIs), service level agreement (SLA) requirements, QoS requirements, and so forth. Embodiments are not limited in this context.

Some embodiments may implement other features to improve network slice performance as well. For example, interrupt handling may be off-loaded from a CPU to a dedicated entity, such as a memory microcontroller (MMC). The MMC is designed to handle interrupts such as SMI interrupts caused by RAS errors. The MMC is also designed to monitor, analyze and diagnose the RAS errors in order to implement various mitigation strategies, such as re-allocating memory regions with higher levels of reliability for higher priority network slices and memory regions with lower levels of reliability for lower priority network slices. The resource allocation scheme may utilize a flow detector component that can dynamically study memory ranges at run time to coordinate with the MMC (e.g., a MMC kernel agent). Based on UE capability information (e.g., hardware characteristics, software characteristics, flow characteristics and other capabilities), a UE can decide to choose a best available network slice for flows using network slice selection assistance information (NSSAI) values.

Over time, memory may fail or otherwise encounter errors. Therefore, embodiments disclosed herein may monitor the use of memory over time to track error rates. The error rates may be tracked across memory address regions within a memory pool and across a set of memory pools in a data center. Based on the tracked error rates, embodiments disclosed herein may identify memory address regions that have higher error rates, and allocate memory metadata bits to ECC for maximum ECC coverage. More generally, for any memory region, embodiments disclosed herein may compute probability values reflecting a probability (or likelihood) that the memory region may return errors (or otherwise fail). In some embodiments, the memory metadata allocation for a given memory region may be based on the probability values for the region. For example, if the probability value indicates a lower likelihood of errors for a first memory region, embodiments disclosed herein may allocate fewer metadata bits to ECC and allocate other metadata bits to other services.

Embodiments disclosed herein may expand system components (e.g., memory controllers, caching agents, operating system (OS), applications, etc.) to support new types of address spaces that may have different memory metadata allocations. For example, an application may require higher levels of reliability and increased ECC coverage for allocated memory. Furthermore, QoS hooks may be expanded to understand the new types of address spaces having different memory metadata allocations. For example, if an application requires a desired amount of bandwidth, the QoS hooks may provide the proper interleaving across memory pools to achieve the desired amount of bandwidth.

Embodiments provide several technical advantages relative to conventional solutions. For example, embodiments provide for memory-error resilient network slicing, fine-granular proactive maintenance per network slice, and secure enclave regions associated with high priority slice to ensure reliable memory regions. Further, a UE can chose and select a best network slice available based on many factors dynamically for flows, that will help assignment of appropriate slices for flows thus drastically reducing over subscription of the more reliable slices. Other technical advantages exist as well.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description or the claims, such terms are intended to be inclusive in a manner similar to the term "comprising." Additionally, in situations wherein one or more numbered items are discussed (e.g., a "first X", a "second X", etc.), in general the one or more numbered items may be distinct or they may be the same, although in some situations the context may indicate that they are distinct or that they are the same.

As used herein, the term "circuitry" may refer to, be part of, or include a circuit, an integrated circuit (IC), a monolithic IC, a discrete circuit, a hybrid integrated circuit (HIC), an Application Specific Integrated Circuit (ASIC), an electronic circuit, a logic circuit, a microcircuit, a hybrid circuit, a microchip, a chip, a chiplet, a chipset, a multi-chip module (MCM), a semiconductor die, a system on a chip (SoC), a processor (shared, dedicated, or group), a processor circuit, a processing circuit, or associated memory (shared, dedicated, or group) operably coupled to the circuitry that execute one or more software or firmware programs, a combinational logic circuit, or Other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

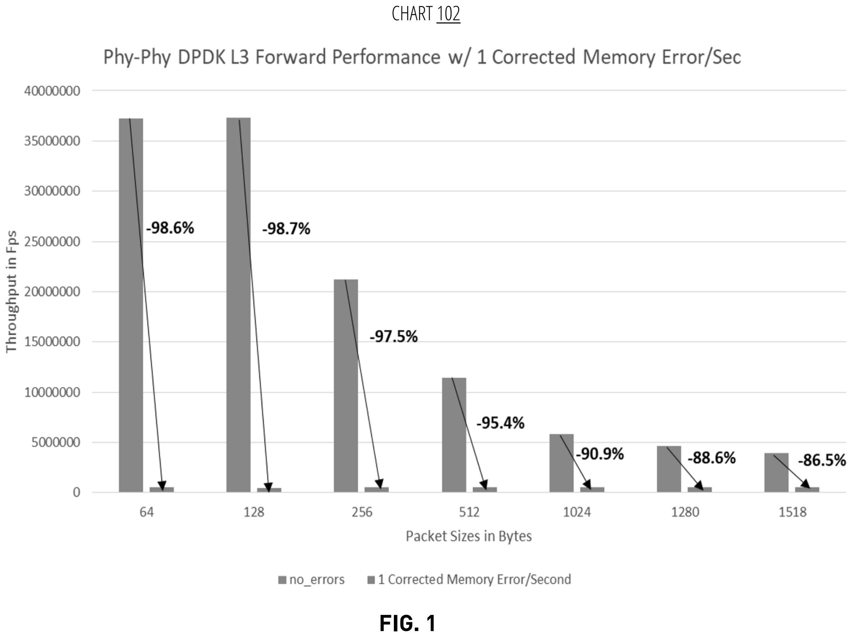

FIG. 1 illustrates a chart 102 that depicts performance impact on a bare-metal Data Plane Development Kit (DPDK) L3 Forwarding performance application where interrupts are generated by a memory device that detects a bit error with one (1) corrected memory error/second. As shown, there can be a very significant degradation in throughput in frames per second arising from delays invoked by servicing interrupts related to bit errors. Multiple hardware recoverable RAS errors (or faults) cause service interruption in SDN and/or NFV applications, both in packet processing and timing critical applications, exceeding 90%+ service outage in some cases. This causes significant negative performance impact on DPDK applications and timing critical applications such as 5G, 6G, virtualized radio access networks (VRAN), evolved packet core (EPC), configurable broadband remote access server (BRAS) or broadband network gateway (BNG) workloads, and so forth. RAS errors may also impact the operation of critical user space applications due to CPU interrupts. The normal behavior for recoverable RAS faults is that RAS interrupts are broadcast to all cores and cannot be masked or steered away, which controls OS behavior to handle the interrupts, and impacts the operation of critical user space applications.

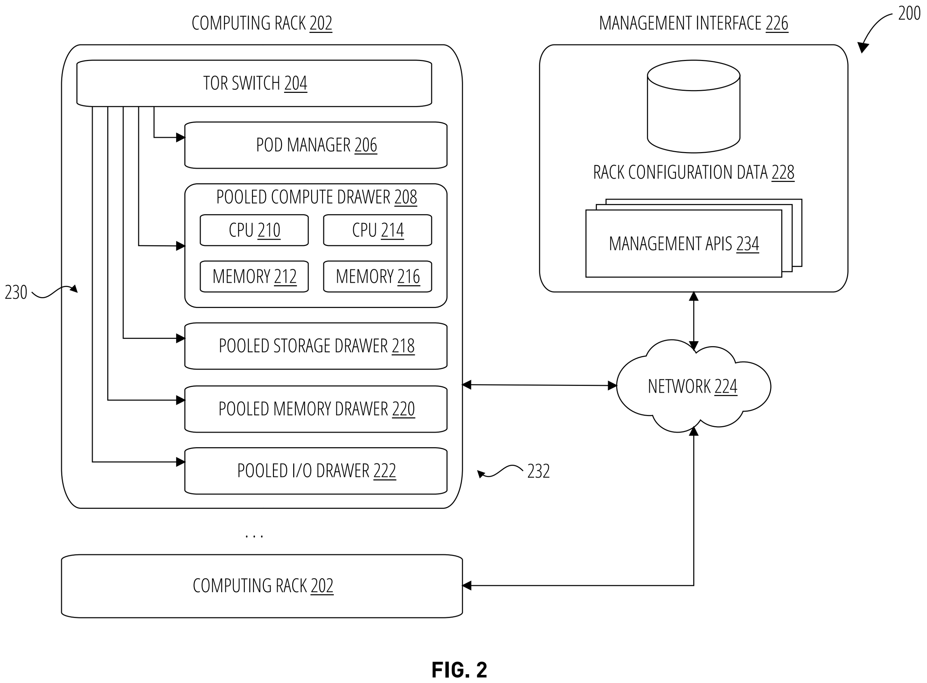

FIG. 2 depicts a computer system 200 that includes multiple computing racks 202 suitable for implementation by a network. Non-limiting examples of networks include a data center network, a cloud computing network, an edge network, a wireless network, a virtualized core network (VCN) for a wireless network, an autonomous driving network, an internet of things (IoT) network, a machine-to-machine (M2M) network, a robotic network, a factory automation network, a time-sensitive network (TSN), and so forth. Embodiments are not limited in this context.

As depicted in FIG. 2, each computing rack 202 includes a Top of Rack (ToR) switch such as ToR switch 204, a pod manager 206, and a plurality of pooled system drawers (or sleds). Generally, the pooled system drawers may include pooled compute drawers 208, pooled storage drawers 218, pooled memory drawers 220, and pooled I/O drawers 222. In the illustrated embodiment the pooled system drawers include an Intel^{®} XEON^{®} pooled computer drawer and/or Intel^{®} ATOM^{™} pooled compute drawer, a pooled storage drawer 218, a pooled memory drawer 220, and a pooled I/O drawer 222. Each of the pooled system drawers is connected to the ToR switch 204 via a high-speed link 230, such as a 40 Gigabit/second (Gb/s) or 100 Gb/s Ethernet link or a 100+ Gb/s Silicon Photonics (SiPh) optical link. In one embodiment high-speed link 230 comprises an 800 Gb/s SiPh optical link.

Multiple computing racks 202 may be interconnected via their ToR switches 204 (e.g., to a pod-level switch or data center switch), as illustrated by connections to a network 224. In some embodiments, groups of computing racks 202 are managed as separate pods via pod managers 206. In one embodiment, a single pod manager 206 is used to manage all of the racks in the pod. Alternatively, distributed pod managers 206 may be used for pod management operations.

The computer system 200 further includes a management interface 226 that is used to manage various aspects of the computer system 200. This includes managing rack configuration, with corresponding operational parameters stored as rack configuration data 228 and/or via one or more management APIs 234.

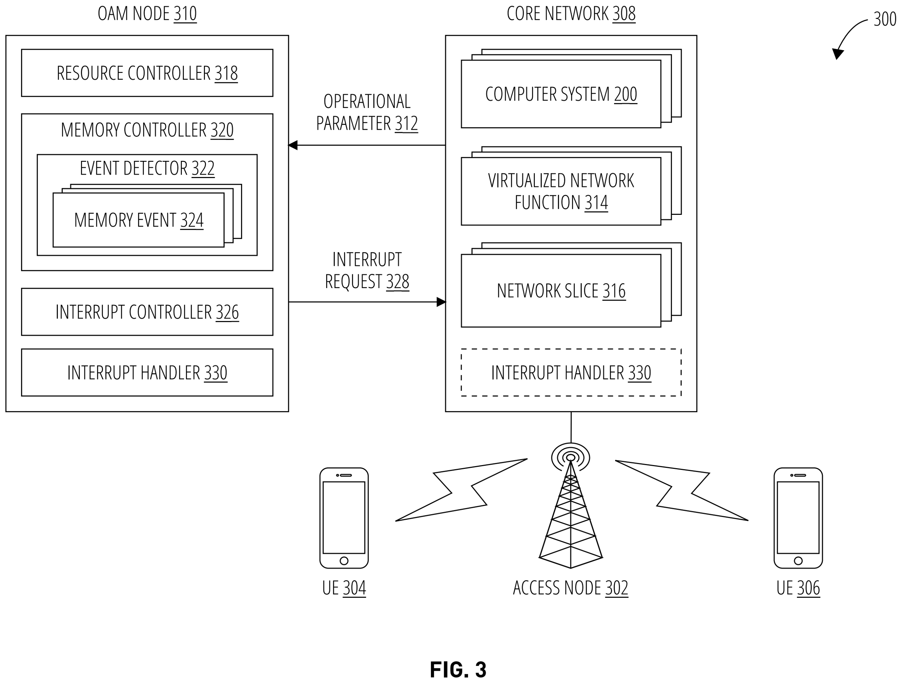

FIG. 3 illustrates a wireless network 300. The wireless network 300 is an example of a type of network that may use the computer system 200. Embodiments are not limited to this example.

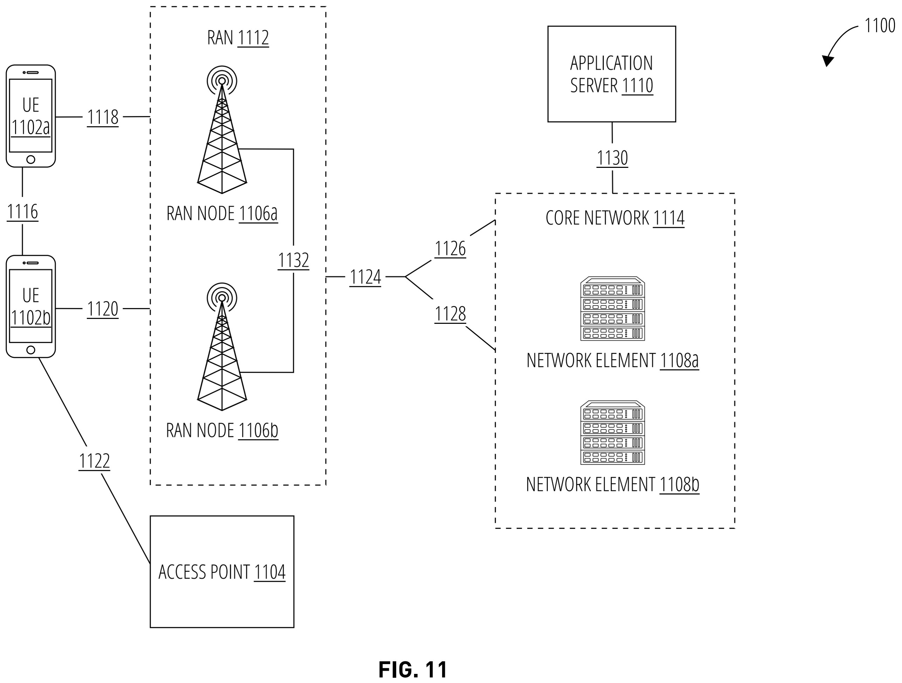

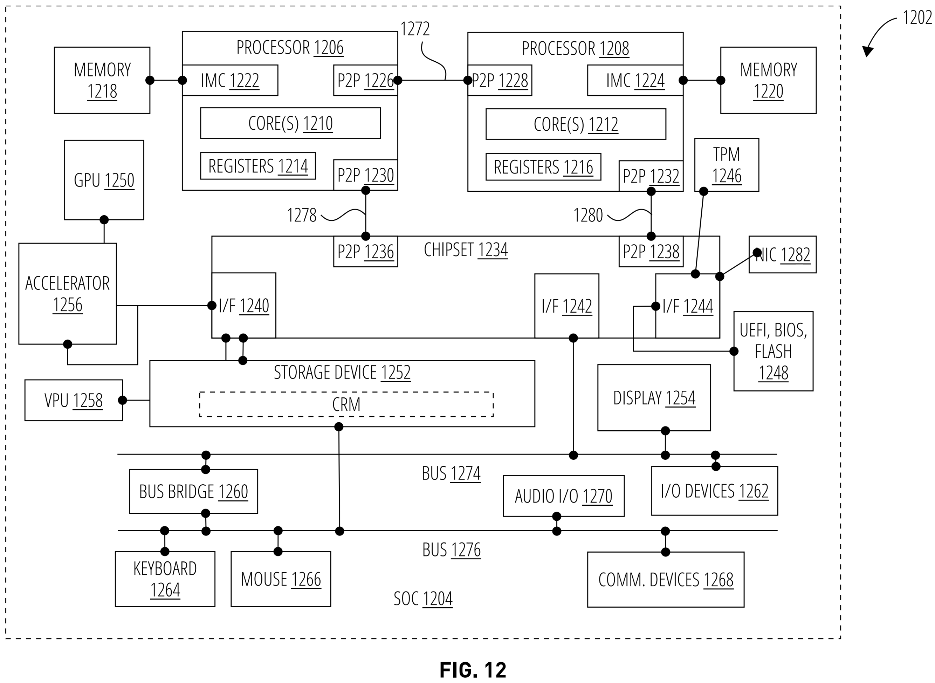

As depicted in FIG. 3, the wireless network 300 comprises a core network 308 and an OAM node 310 for a 3GPP system. The core network 308 and the OAM node 310 may communicate various types of data, such as operational parameters 312 and interrupt requests 328, for example. The core network 308 may be in communication with an access node 302 via wired or wireless signals. The access node 302 may communicate with a UE 304 and a UE 306 via wireless signals using any suitable radio access technology (RAT). The wireless network 300 and a specific example architecture is described in more detail with reference to FIG. 11. The core network 308 and a specific example architecture is described in more detail with reference to FIG. 12. Embodiments are not limited to these examples.

The core network 308 comprises a set of physical infrastructure equipment, such as computer system 200, to provide a set of virtualized network functions 314 via one or more network slice 316. The core network 308 includes multiple network elements configured to offer various data and telecommunications services to customers/subscribers (e.g., users of UE 304 and/or UE 306) who are connected to the core network 308 using a radio access network (RAN). The components of the core network 308 may be implemented in one physical node or separate physical nodes of the computer system 200 and can include components to read and execute instructions from a machine-readable or computer-readable medium (e.g., a non-transitory machine-readable storage medium). In some implementations, network functions virtualization (NFV) may be used to virtualize some or all of the network node functions described here using executable instructions stored in one or more computer-readable storage mediums, as described in further detail below. A logical instantiation of the core network 308 may be referred to as a network slice, and a logical instantiation of a portion of the core network 308 may be referred to as a network sub-slice. NFV architectures, software defined networks (SDN), and other types of infrastructures may be used to virtualize one or more network functions, alternatively performed by proprietary hardware, onto physical resources comprising a combination of industry-standard server hardware, storage hardware, or switches. In Other words, NFV systems can be used to execute virtual or reconfigurable implementations of one or more network components or functions, or both.

The core network 308 communicates control and application data with a management entity, such as an Operations, Administration, and Maintenance (OAM) node like OAM node 310. In a 3GPP network, the OAM node 310 is a component responsible for the centralized management of the mobile telecommunications infrastructure. It oversees various network elements such as base stations, core network components, and user equipment by providing functions like configuration management, fault detection, performance monitoring, and security administration. The OAM node 310 enables network operators to perform tasks such as software updates, parameter adjustments, and real-time monitoring, ensuring the network operates efficiently and reliably. By maintaining optimal network performance and quickly addressing issues, the OAM node 310 plays a role in delivering consistent service quality to end-users.

With the evolution of 3GPP standards, especially in the context of 5G networks, the OAM node 310 has advanced to handle increased complexity and scalability demands. It now often incorporates technologies like virtualization, automation, and artificial intelligence to enhance operational efficiency. For instance, it supports self-organizing network (SON) capabilities, allowing the network to automatically optimize performance and resource allocation without manual intervention. Additionally, the OAM node 310 adheres to standardized interfaces and protocols defined by 3GPP, ensuring seamless interoperability between different network components and facilitating the integration of new services and technologies as the network evolves.

The OAM node 310 comprises a resource controller 318, a memory controller 320, an interrupt controller 326, and an interrupt handler 330. Additionally, or alternatively, the interrupt handler 330 may be implemented as part of the computer system 200 of the core network 308.

The resource controller 318 is responsible for allocating physical resource elements 232 of the computer system 200 to the various virtualized network function 314 and/or network slice 316 of the core network 308. In a 3GPP core network, physical infrastructure resources, such as computing power, storage, and networking capabilities, are allocated to virtualized network functions (VNFs) through a process enabled by Network Functions Virtualization (NFV). The physical hardware is abstracted by a virtualization layer, which can involve hypervisors for virtual machines or container platforms for containerized applications. This abstraction allows multiple VNFs to run on shared physical resources while maintaining isolation and security between them. The resource controller 318 may perform resource allocation using a NFV Management and Orchestration (MANO) framework, which includes components like the Virtualized Infrastructure Manager (VIM), NFV Orchestrator (NFVO), and VNF Manager (VNFM). When a VNF needs to be deployed or scaled, the NFVO coordinates with the VIM to allocate the necessary physical resources from the underlying infrastructure. The VIM keeps track of available resources and ensures that VNFs receive the required compute, storage, and networking capabilities. This dynamic and automated allocation process allows for efficient utilization of physical infrastructure, enabling the core network to adapt to changing demands and optimize performance.

The memory controller 320 is responsible for managing memory units of the pooled memory drawer 220 of the computer system 200 allocated to the virtualized network function 314 and/or network slice 316. A memory controller 320 is a component in a computer system responsible for managing the flow of data between the central processing unit (CPU) and the memory (e.g., random access memory (RAM) or flash memory). It acts as an interface that handles all read and write operations to the memory, ensuring that data is correctly stored and retrieved when needed. The memory controller 320 manages tasks such as memory addressing, timing, and access protocols, coordinating how and when data moves to and from the memory units. This coordination is allows the CPU to efficiently process data without unnecessary delays. In earlier computer architectures, the memory controller 320 was typically a separate chip located on the motherboard, often within the chipset's northbridge. However, in modern systems, the memory controller 320 may be integrated directly into the CPU. This integration reduces latency and improves overall system performance by allowing faster communication between the CPU and memory. The memory controller 320 also supports various memory technologies and configurations, such as different types of RAM (e.g., DDR4, DDR5) and multi-channel memory architectures. By handling these complex interactions, the memory controller 320 plays a role in the stability and speed of a computer system.

The memory controller 320 comprises an event detector 322 arranged to detect one or more memory events 324. A memory event 324 refers to any operation or occurrence involving the access, transfer, or management of data between the CPU and the memory modules (RAM). These events include read and write operations, where data is either retrieved from memory to be processed by the CPU or stored back into memory after processing. The memory controller orchestrates these operations by sending the appropriate signals to memory modules, handling address decoding, and ensuring data integrity during transfer. Another type of memory event is the refresh cycle for Dynamic Random-Access Memory (DRAM). Since DRAM stores data in capacitors that can leak charge over time, the memory controller 320 periodically sends refresh commands to recharge these capacitors and prevent data loss. Additionally, in systems that utilize Error-Correcting Code (ECC) memory, the memory controller 320 manages events related to error detection and correction. It monitors data for errors during read/write operations and corrects single-bit errors to maintain system reliability. By managing these and other memory-related events, the memory controller 320 ensures efficient and accurate communication between the CPU and memory, which is needed for overall system performance.

When the memory controller 320 detects a memory event 324 such as a memory error (e.g., a RAS error), the memory controller 320 may cause the interrupt controller 326 to generate an interrupt request 328. The memory controller 320 may encode and send the interrupt request 328 to the interrupt handler 330 implemented by the OAM node 310 and/or the core network 308. An interrupt handler 330, also known as an interrupt service routine (ISR), is a specialized function or routine in a computer system that handles interrupt requests 328. Interrupt requests 328 are signals generated by hardware devices or software applications indicating that an event, such as a memory event 324, needs immediate attention from the CPU. These events could be anything from a keyboard press, mouse movement, hardware failures, or timers reaching a certain value. When an interrupt occurs, the CPU pauses its current execution flow and transfers control to the corresponding interrupt handler to address the event promptly. The interrupt handler 330 performs the necessary tasks to manage the interrupting event, such as reading input data, processing an error, or performing a scheduled operation. After handling the interrupt, the interrupt handler 330 ensures that the CPU's state is restored to its previous context so that the interrupted process can resume seamlessly. This mechanism allows for real-time responsiveness and efficient multitasking in computer systems, allowing high-priority tasks to be addressed without significant delay while maintaining overall system performance.

As previously described, over time, memory may fail or otherwise encounter errors, such as memory reliability, availability, and serviceability (RAS) errors. RAS errors can heavily impact performance of a network slice due to an increase in interrupt requests 328 and interrupt handling operations. For example, when a memory event 324 such as a memory error or memory fault is detected (e.g., a memory found a bit error and corrected the error), a processor or an interrupt controller 326 generates an interrupt request 328 to be serviced by multiple cores. This causes interruptions to applications running across a system, even when a single core/resource is affected. If these faults occur on multiple resources or a fault occurs multiple times on a single resource, each interrupt has to be addressed across all cores. As a result, cores interrupt normal processing to handle this event. Servicing the memory fault interrupts core operations such as packet processing and other activities of all cores that receive the interrupt. For example, cores dedicated to packet processing or cores dedicated to real-time scheduling stop their operations in order to execute a kernel thread to handle the interrupts. In a NFV and SDN environment, this causes interruptions to all applications, even those that are not directly affected. This can contribute to unacceptable levels of service outage. Stopping and resuming the operation of processing involves time-intensive acts of saving a state of a currently-executing process to a stack, reloading the state, and resuming operation of the process. Accordingly, interrupting a process delays its completion. For example, an OS stops its operations to handle interrupts.

Recurring errors can contribute significantly to performance degradation, even though the same corrective action may be able to address multiple faults. The handling of hardware recoverable faults also effects the determinism of the workload performance. If these interrupts occur on more than one resource, or frequently recur, this can lead to an inability for Communications Service Providers (CoSPs) to meet their strict SLAs concerning workload performance and/or perform effective capacity planning as there can be an increase in performance uncertainty.

To solve these and Other technical problems, the resource controller 318 implements an improved resource allocation scheme for allocating network resources, such as physical resource element 232 of the computer system 200, to a hardware or software entity (e.g., virtualized network function 314 and/or network slice 316) in a network. The resource allocation scheme may include techniques for memory configuration and allocation to support various types of networks, such as cloud computing networks, edge networks, and wireless communications networks, among other types of networks. Some embodiments are particularly directed to a resource allocation scheme designed to support network slice 316 of a wireless network 300, such as a 5G or 6G wireless network, as defined by 3GPP or other standards. The resource allocation scheme maps operational parameters 312 to memory regions of the pooled memory drawer 220, where the memory regions are differentiated based on memory services, such as memory reliability. The resource allocation scheme allows network slices assigned higher quality of service (QoS) and reliability parameters (e.g., low latency and low packet loss) to be allocated to memory regions offering higher reliability services, thereby reducing the probability of memory events such as RAS errors interrupting key network slice transports. Non-limiting examples of operational parameters 312 are values related to one or more of accessibility, availability, latency, reliability, data rates, data flows, area traffic capacity, integrity, utilization, retainability, mobility, energy efficiency, quality of service, and so forth. The operational parameters 312 may be defined by one or more policies from an orchestration function, key performance measurements (KPMs), key performance indicators (KPIs), service level agreement (SLA) requirements, QoS requirements, and so forth. Embodiments are not limited in this context.

The resource controller 318 may perform resource allocations for the virtualized network function 314 and the network slice 316 of the core network 308. The resource allocations may comprise, for example, allocating memory regions from a memory pool such as the pooled memory drawer 220. The memory controller 320 may manage the memory allocations assigned by the resource controller 318. Additionally, or alternatively, the memory controller 320 may assign and manage the memory allocations on a static or dynamic basis. Embodiments are not limited in this context.

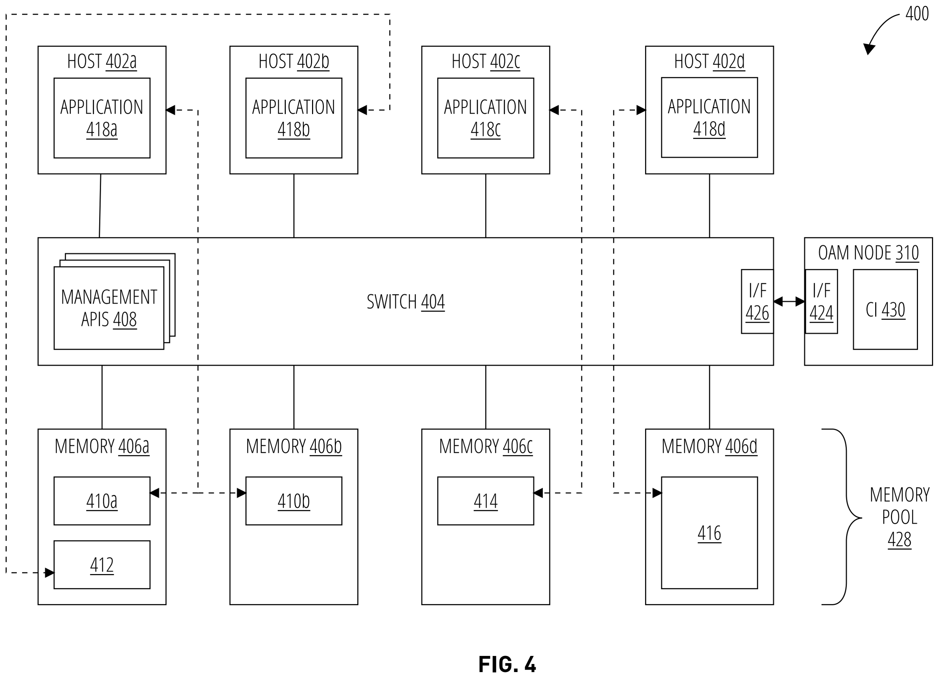

FIG. 4 depicts a memory system 400 that implements memory pooling. The memory system 400 is an example of memory pooling suitable for the wireless network 300. For example, the OAM node 310 send data for a memory configuration to support virtualized network function 314 and/or network slice 316 allocated by the resource controller 318 and/or memory controller 320. Embodiments are not limited to this example.

The memory pooling implemented by the memory system 400 may be according to various architectures, such as the Compute Express Link (CXL) architecture. The CXL architecture may be based on a Peripheral Component Interconnect-enhanced (PCIe) physical layer and provides a respective common memory space for each of a plurality of hosts 402a-402d of the memory system 400. The hosts 402a-402d are representative of any type of physical and/or virtualized computing system. The hosts 402a-402d may each include applications 418a-418d. As shown, a switch 404 couples the hosts 402a-402d to a memory pool 428 comprising a plurality of memory devices including memory 406a-memory 406d. The switch 404 may be a CXL switch and may provide one or more management APIs 408 to implement memory pooling.

Generally, the memory pool 428 is one or more regions of memory, where each region includes a range of one or more memory addresses. The regions of memory in a memory pool may span across multiple memory devices. Furthermore, a given memory device may be shared among multiple hosts 402a-402d. In some embodiments, a memory device may be shared by 16 hosts. In some embodiments, a single memory device is allocated to a single host. More generally, memory pools may be dynamically allocated and deallocated based on need. For example, software executing on host 402a may request, via the management APIs 408, a memory pool. The management APIs 408 may be an example of the management APIs 234. The management APIs 408 may then cause the switch 404 to allocate a memory pool to the host 402a. The software may subsequently request, via the management APIs 234, deallocation of the memory pool. The management APIs 408 may then cause the switch 404 to deallocate the memory pool from the host 402a.

As shown in FIG. 4, memory 406a includes a memory region 410a and a memory region 412, memory 406b includes a memory region 410b, memory 406c includes a memory region 414, and memory 406d includes a memory region 416. Therefore, in one example, a first memory pool may include memory regions 410a and memory region 410b, which may be allocated to a host such as host 402a. A second memory pool may include memory region 412 and may be allocated to host 402b. A third memory pool may include memory region 414 and may be allocated to host 402c. A fourth memory pool may include memory region 416, which may be allocated to host 402d. Embodiments are not limited in this context.

Often, different services may be applied to memory 406a-406d. Example services include, but are not limited to, ECC services, encryption services, isolation services, memory tiering, directory tracking, and/or protocol services. Encryption services may encrypt the data in memory. Example encryption services include Intel^{®} Software Guard Extensions (SGX), AMD^{®} Secure Memory Encryption (SME), the Arm^{®} Confidential Compute Architecture. Isolation services may isolate memory from different tenants and may include the Intel Trust Domain Extensions (TDX), Arm TrustZone^{®}, AMD Secure Encrypted Virtualization (SEV), and AMD Secure Encrypted Virtualization-Encrypted State (SEV-ES). Memory tiering may create one or more tiers of memory, e.g., where one tier may include different types of memory (e.g., with different performance characteristics such as speed, latency, etc.) than another tier. Examples of memory tiering include the Intel Optane technologies and the AMD Radeon^{™} RAMDisk. Directory tracking services may handle coherence between distributed memory (e.g., between different memory pools across the memory 406a-406d). Example protocol services may include protocols to support the Intel Universal Path Interconnect (UPI). Embodiments are not limited in these contexts.

Conventionally, services are uniformly applied to the memory 406a-406d and/or any memory pools created thereon. However, embodiments disclosed herein permit the application of different services across different memory regions, different memory ranges, different virtual address spaces, different memory pools, and/or different physical memory elements. To do so, embodiments disclosed herein leverage memory metadata to indicate which services among a plurality of services are applied to the memory. However, since memory metadata is limited, in some embodiments, not all available services can be applied to memory. For example, using ECC on memory region 412 may preclude the use of one or more other services in the memory region 412, as ECC requires one or more bits of memory data.

Therefore, for example, encryption and ECC services may be applied to memory region 410a, while encryption services and isolation services may be applied to memory region 410b. As another example, a first level of ECC services may be applied to memory region 412 and a second level of ECC services may be applied to memory region 416. Different levels of ECC services may be based on the number of bits allocated to ECC, where more bits allocated to ECC provide greater ECC coverage in the memory 406a-406d than fewer ECC bit allocations. As stated, the metadata of the memory may be modified to reflect the allocation of services from a plurality of services to the memory.

For the wireless network 300, the resource controller 318 and/or the memory controller 320 of the OAM node 310 implements a resource allocation scheme that maps operational parameters 312 to memory regions 410a-410d, where the memory regions are differentiated based on memory services, such as memory reliability. The resource allocation scheme allows network slices assigned higher quality of service (QoS) and reliability parameters (e.g., low latency and low packet loss) to be allocated to memory regions offering higher reliability services, thereby reducing the probability of memory events 324 such as RAS errors interrupting key network slice transports.

Once the memory regions are allocated, the OAM node 310 encodes and sends configuration information 430 comprising data or metadata representing the memory allocations to the switch 404 via an interface 424, such as a memory interface, for example. The switch 404 receives the configuration information from the OAM node 310 via an interface 426. The switch 404 then configures connections between the various hosts 402a-402d and/or applications 418a-418d, representing software or hardware entities for network slice 316

Embodiments disclosed herein may expand system components (e.g., memory controllers, caching agents, operating system (OS), applications, etc.) to support new types of address spaces that may have different memory metadata allocations. For example, an application 418a-418d may require higher levels of reliability and increased ECC coverage for allocated memory. Furthermore, QoS hooks may be expanded to understand the new types of address spaces having different memory metadata allocations. For example, if an application 418a-418d requires a desired amount of bandwidth, the QoS hooks may provide the proper interleaving across memory pools to achieve the desired amount of bandwidth.

The wireless network 300 and the memory system 400 provides several technical advantages relative to conventional solutions. For example, the wireless network 300 and memory system 400 provides for memory-error resilient network slicing, fine-granular proactive maintenance per network slice, and secure enclave regions associated with high priority slice to ensure reliable memory regions. Further, a UE 304 and/or UE 306 can chose and select a best network slice available based on many factors dynamically for data flows, that will help assignment of appropriate slices for flows thus drastically reducing over subscription of the more reliable slices. Other technical advantages exist as well.

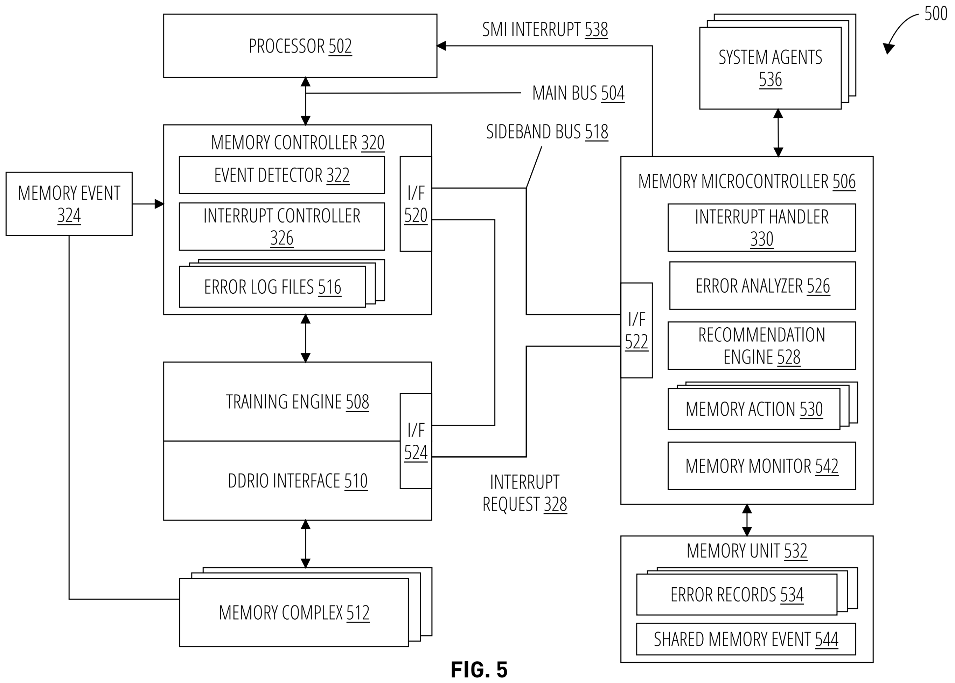

FIG. 5 illustrates a computing system 500. The computing system 500 is an example of a computing architecture or framework for enhanced interrupt management suitable for the wireless network 300 and/or the memory system 400. Specifically, the resource controller 318 and/or memory controller 320 perform memory allocation and management to reduce or avoid memory events 324 and subsequent interrupt requests 328. However, over time, memory events 324 will eventually occur and cause generation of interrupt requests 328. The computing system 500 provides a system for improved management of interrupt requests 328 to reduce or avoid disruptions to system operations of system processors, such as CPU 210 and/or CPU 214 of the pooled compute drawer 208.

The computing system 500 implements a new capability of a memory microcontroller 506 and a sideband bus 518 to manage memory events 514 and interrupt requests 328 caused by the memory events 324. Interrupt handling may be off-loaded from a processor 502 or an interrupt handler 330 for the processor 502 to a dedicated entity, such as a memory microcontroller (MMC) like memory microcontroller 506. The memory microcontroller 506 is designed to handle interrupt requests 328 such as SMI interrupts caused by RAS errors. The memory microcontroller 506 is also designed to monitor, analyze and diagnose the RAS errors in order to implement various mitigation strategies, such as re-allocating memory regions with higher levels of reliability for higher priority network slices and memory regions with lower levels of reliability for lower priority network slices. The resource controller 318 may utilize a flow detector component that can dynamically study memory ranges at run time to coordinate with the memory microcontroller 506 (e.g., a MMC kernel agent). Based on UE capability information (e.g., hardware characteristics, software characteristics, flow characteristics and other capabilities), a UE 304 and/or UE 306 can decide to choose a best available network slice for flows using network slice selection assistance information (NSSAI) values.

As depicted in FIG. 5, the computing system 500 comprises a processor 502 communicatively coupled to a memory controller 320 via a main bus 504. The memory controller 320 is communicatively coupled to a memory microcontroller 506, a training engine 508, and a double data rate (DDR) input/output (DDRIO) like DDRIO interface 510 via a sideband bus 518 and a set of interfaces, such as interface 520, interface 522, and interface 524. The DDRIO interface 510 is communicatively coupled to a memory complex 512. The memory microcontroller 506 is communicatively coupled to a memory unit 532 and a set of system agents 536.

As previously described, the memory controller 320 includes an event detector 322 to detect a memory event 324 from the memory complex 512. The memory controller 320 may also implement an interrupt controller 326. The memory complex 512 may be implemented as some or all of the memory system 400, such as the pooled memory drawer 220, for example. When the memory event 324 is a memory error such as an RAS error, the interrupt controller 326 generates an interrupt request 328 for transport over the sideband bus 518 via the interface 520. The memory controller 320 then logs the memory event 324 in one or more error log files 516.

The memory microcontroller 506 operates as a memory RAS offload engine. When a RAS event is detected by the memory controller 320, the memory controller 320 generates an interrupt request 328, encodes the interrupt request 328, and transports the interrupt request 328 to the memory microcontroller 506 using the sideband bus 518. The memory microcontroller 506 reads the error log files 516 from the memory controller 320. The memory microcontroller 506 formats the error log files 516 into a standard error record for storage in the memory unit 532, such as memory microcontroller 506 static random access memory (SRAM). Firmware for the memory controller 320 periodically clears the error log files 516 to allow more future error to be logged. After errors are collected, an error analyzer 526 is executed in firmware or OS software to determine a memory action 530 for the memory event 324. Memory RAS features and their controls are discovered through standard APIs, such as the management APIs 234 and/or management APIs 408. The RAS APIs enable communication between system agents 536 and the memory microcontroller 506, such as management agents of the OS software, firmware, and/or baseboard management controller (BMC). The APIs may use a mailbox mechanism that the system agents 536 can access via Memory Mapped I/O (MMIO) registers or may use an Out of Band (OOB) method of accessing the mailbox through a Management Component Transport Protocol (MCTP).

The memory microcontroller 506 receives and decodes the interrupt request 328 from the sideband bus 518 via the interface 522. The memory microcontroller 506 comprises an interrupt handler 330, an error analyzer 526, and a recommendation engine 528. The interrupt handler 330 receives, decodes and manages a response to the interrupt request 328. For example, the interrupt handler 330 may request the error log files 516 from the memory controller 320 via the sideband bus 518. The interrupt handler 330 may format and store the data from the error log files 516 in one or more error records 534 of the memory unit 532.

The error analyzer 526 may analyze the error records 534 for underlying errors causing the memory event 324. Memory errors in a computer system are generally classified into soft errors and hard errors. Soft errors are transient issues caused by external factors like cosmic rays or electromagnetic interference, temporarily flipping bits in memory cells without causing permanent damage. Examples include transient errors and single-event upsets (SEUs). Hard errors are permanent and result from physical defects or failures in the memory hardware, such as manufacturing defects, wear and tear, or overheating, leading to conditions like stuck bits where a memory cell consistently reads incorrect data.

The error analyzer 526 analyzes the error records 534 for memory events 324 that are shared across multiple error records 534 for a memory region, memory unit, controller, or device. The shared memory error may reveal a root cause for the memory events 324 and subsequent interrupt requests 328. Examples of a shared memory error may be too few ECC bits allocated to a particular memory region, faulty hardware causing the memory events 324, a number of read or write requests above a threshold defined by an SLA, and so forth. The error analyzer 526 attempts to identify a shared memory error, and it forwards it to the recommendation engine 528.

The recommendation engine 528 receives data for the shared memory error as input, and it predicts, infers, or generates a memory action 530 to correct the shared memory error. To handle these errors, systems employ a combination of hardware and software strategies. Error detection and correction codes (ECC) and parity checks are used to detect and correct single-bit errors, maintaining data integrity. Memory scrubbing proactively reads and writes memory data to fix soft errors before they cause problems. Operating systems and firmware can intervene through interrupt handling, system logging, alerts, or even halting operations to prevent data corruption in case of uncorrectable errors. Hardware solutions like redundant memory modules, memory sparing, and mirroring provide fault tolerance, while software-level methods such as application checkpointing and data validation help recover from crashes and ensure data accuracy. Together, these approaches minimize data loss and system downtime, preserving system stability and performance. The recommendation engine 528 generates an appropriate memory action 530 for the shared memory error, encodes the memory action 530, and transports the memory action 530 over the sideband bus 518 via the interface 522 to the memory controller 320 and/or the resource controller 318. The memory controller 320 and/or the resource controller 318 may take corrective action for the memory complex 512 based on the memory action 530.

In some embodiments, the recommendation engine 528 may be implemented as a machine learning (ML) model. A machine learning model is an algorithm or mathematical function that processes input data to make predictions, decisions, or identify patterns based on the information it has been trained on. It learns from historical data and applies this knowledge to new, unseen data, improving its accuracy over time through a process called training. Machine learning models can be simple linear regressors for predicting continuous values or complex neural networks capable of handling high-dimensional problems like image and speech recognition. Machine learning models are categorized into various types based on their functionality: supervised learning, where the model is trained using labeled data; unsupervised learning, which deals with unlabeled datasets to find hidden patterns or groupings within the data; semi-supervised learning that combines both approaches; and reinforcement learning, in which an agent learns by interacting with its environment and receiving feedback through rewards. The choice of model depends on the specific problem at hand, ranging from linear regression for forecasting to convolutional neural networks (CNNs) for image classification tasks. These models undergo rigorous evaluation using metrics such as accuracy, precision, recall, F1 score, or area under the ROC curve (AUC-ROC), ensuring they perform optimally on real-world data and applications.

In some embodiments, the ML model for the recommendation engine 528 may be trained by the training engine 508 using training data from the error records 534 received over the sideband bus 518 via the interface 524. Training a machine learning model involves feeding it with data and letting the algorithm adjust its internal parameters to minimize error in predictions or decisions. The training process begins by splitting available data into two sets: a larger portion called the training set, which is used to teach the model, and a smaller portion known as the validation set, which helps tune hyperparameters and prevent overfitting. During training, the model iteratively updates its parameters-weights for linear models or weights for connections between neurons in neural networks-based on the discrepancy between predicted outputs and actual target values (the error) computed using a chosen loss function. The training algorithm's goal is to find the optimal set of parameters that result in the lowest possible loss, indicating the best performance on the training data. Various optimization techniques like gradient descent are employed for this purpose. The model may undergo multiple iterations or epochs over the entire dataset until it converges to a solution where further improvements become negligible. Cross-validation methods such as k-fold cross-validation can be used to assess the model's generalizability and robustness, ensuring that it performs well on unseen data by dividing the training set into smaller subsets and using each subset in turn for validation while training on the remaining parts. After sufficient iterations and validations, a trained machine learning model is ready for deployment, wherein its performance can be further evaluated against an independent test dataset to measure real-world effectiveness.

The DDRIO interface 510 may receive the memory action 530 and/or control directives to perform the memory action 530 over the sideband bus 518 via the interface 524. DDRIO interface 510 comprises interface circuitry that manages data transmission between the memory controller 320 and DDR memory modules like DDR3, DDR4, or DDR5 synchronous dynamic random-access memory (SDRAM). The DDRIO interface 510 encompasses the physical layer components responsible for sending and receiving high-speed electrical signals over the memory bus. This includes drivers, receivers, timing circuits, and other signal integrity components that ensure reliable communication at the high data rates characteristic of DDR memory technologies. The DDRIO plays a role in maintaining the performance and stability of the memory subsystem such as memory complex 512. It handles tasks such as signal amplification, voltage level shifting, and timing adjustments to meet the stringent requirements of high-speed memory operations. As memory speeds increase with newer DDR standards, the design and implementation of the DDRIO interface 510 addresses challenges like signal degradation, crosstalk, and electromagnetic interference. Efficient DDRIO design enables the memory controller 320 to communicate effectively with memory modules, facilitating fast and reliable data access essential for overall system performance.

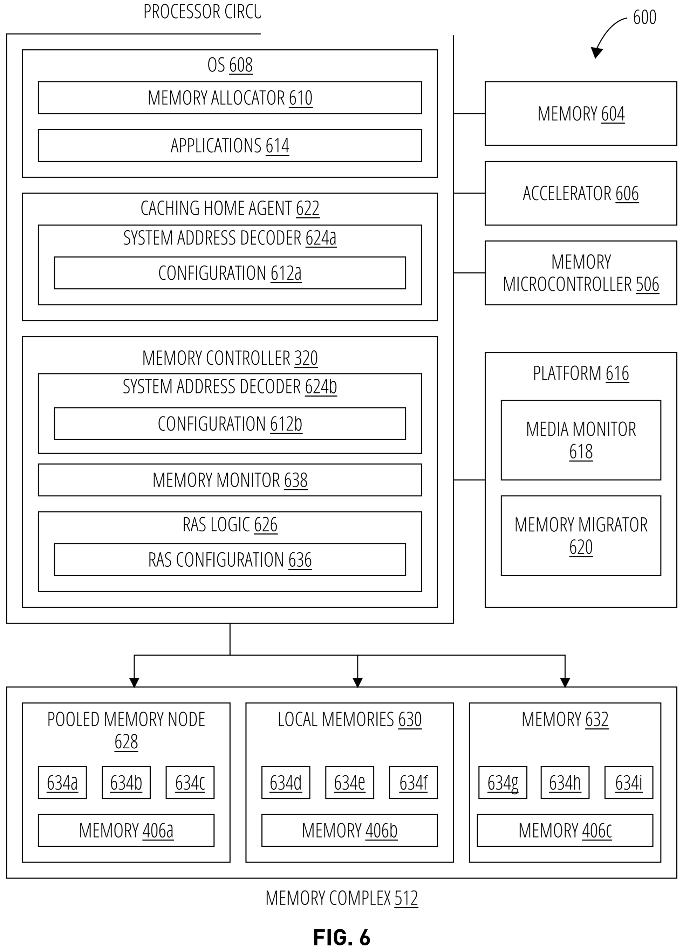

Over time, memory may fail or otherwise encounter errors. Therefore, the memory microcontroller 506 may include a memory monitor 542 to monitor the use of memory over time to track error rates. Additionally, or alternatively, the memory monitor 542 may be implemented in other system components, such as the memory controller 320 as depicted in FIG. 6. The error rates may be tracked across memory address regions within a memory pool and across a set of memory pools in a data center. Based on the tracked error rates, the memory monitor 542 may identify memory address regions that have high error rates, and allocate memory metadata bits to ECC for maximum ECC coverage. More generally, for any memory region, the memory monitor 542 may compute probability values reflecting a probability (or likelihood) that the memory region may return errors (or otherwise fail). In some embodiments, the memory metadata allocation for a given memory region may be based on the probability values for the region. For example, if the probability value indicates a lower likelihood of errors for a first memory region, embodiments disclosed herein may allocate fewer metadata bits to ECC and allocate other metadata bits to other services. Conversely, if the probability value indicates a higher likelihood of errors for a first memory region, the resource controller 318 and/or the memory controller 320 may allocate more metadata bits to ECC rather than allocating metadata bits to other services. Embodiments are not limited to these examples.

FIG. 6 illustrates a computing system 600 configured to implement adaptive memory metadata allocation, according to one example. As shown, the computing system 600 includes a processor circuitry 602 coupled to memory 604, an accelerator 606, a platform 616, and a memory complex 512, each of which may be implemented in circuitry and/or a combination of circuitry and software. The memory complex 512 may include the switch 404 and other elements of memory system 400, which are not pictured in FIG. 6 for clarity. The accelerator 606 may be a data copy accelerator (also referred to as a data streaming accelerator). One example of an accelerator 606 is the Intel Data Streaming Accelerator (DSA).

The platform 616 is generally configured to manage memory metadata and/or memory service allocation in the memory system 400. For example, the platform 616 may be software and/or hardware to include a media monitor 618 to monitor the use or other attributes (e.g., age, error rates, etc.) of the memory 406a-406d in the memory complex 512. The memory migrator 620 may be configured to cause data to be migrated from a first memory location to a second memory location in the CXL and memory complex 512.

The CXL and memory complex 512 is representative of the configuration depicted in FIG. 4. For example, the memory complex 512 includes the switch 404 (not pictured for clarity). The memory complex 512 includes various memory pool entities, including pooled memory node 628, local memories 630, and devices or other memory 632. Pooled memory node 628 may include memory pools 634a-634c built at least in part on memory 406a. Local memories 630 may include memory pools 634d-634f built at least in part on memory 406b. Devices or Other memory 632 may include memory pools 634g-634i built at least in part on memory 406c. Embodiments are not limited in this context.

As shown, the processor 502 executes an OS 608. The OS 608 may be any type of operating system. The OS 608 includes a memory allocator 610 to allocate, deallocate, or otherwise manage memory pools in the memory complex 512 for one or more applications. In some embodiments, the applications may execute on other systems (e.g., one of the hosts 402a-402d communicably coupled to the computing system 600). Therefore, the OS 608 and/or applications on other hosts may transmit requests to the computing system 600 via one or more APIs, e.g., the management APIs 234 and/or management APIs 408 of the switch 404.

The caching home agent 622 may handle memory management operations for the processor circuitry 602. For example, if the processor circuitry 602 issues a request to access a first memory address, the caching home agent 622 may redirect or otherwise translate the request such that the appropriate memory address is accessed. More generally, the caching home agent 622 may resolve coherency across multiple processors and snoop requests from processor cores and/or local or remote agents. The address space of the memory complex 512 may be interleaved across different caching home agents 622, which collectively act as a single logical caching home agent 622. The caching home agent 622 includes an instance of a system address decoder 624a. As the memory controller 320 includes a corresponding instance of the system address decoder 624b. The memory controller 320 generally handles access to the memory in the memory complex 512.

In some embodiments, the OS 608 may define a plurality of virtual memory spaces. The OS 608 may map the virtual memory spaces to respective elements of physical memory, e.g., memory 406a-406d. For example, the OS 608 may define a first virtual memory space and map the first virtual memory space to a physical memory region, such as memory region 412. Similarly, the OS 608 may define a second virtual memory space and map the second virtual memory space to a physical memory region, such as memory region 414. The OS 608 may store the mappings in a page table in a translation lookaside buffer (TLB), e.g., a TLB of the processor circuitry 602. Furthermore, the OS 608 may allocate different sets of memory resources for the virtual memory spaces. The OS 608 may further define metadata (e.g., configuration 612a and/or configuration 612b) for different features for each virtual memory space that is applied to the virtual memory space and/or the underlying physical memory regions.

The system address decoders 624a, 624b, are expanded to support different address spaces with different service configurations for different memory configurations (e.g., virtual memory spaces, physical memory ranges, physical memory tiers, physical memory pools, etc.). The address spaces may be physical address spaces and/or virtual address spaces. The service configurations may be applied to the virtual address spaces and/or the physical address spaces. The system address decoders 624a, 624b may include memory metadata for a given memory configuration. The service configurations for a given address space may be configured statically and/or adaptively. In some embodiments, a privileged entity (e.g., ring 0 or root privileges in the OS 608) may be required to configure service configurations for memory. In some embodiments, different service configurations may include predetermined sets of different memory services.

For example, a first memory range (e.g., memory region 410a) may be focused on resiliency due to the age of the media (e.g., memory 406a). The first memory range may be a physical memory range and/or a virtual memory range that is mapped to a physical memory range. In such an example, the services applied to the first memory range include maximum ECC bit coverage. Doing so may consume all metadata bits for the first memory range, leaving no additional metadata bits for other services for the first memory range. As another example, a second memory range (e.g., memory region 412) may be focused on resiliency due to the usage mode. The second memory range may be a physical memory range and/or a virtual memory range that is mapped to a physical memory range. In such an example, the services applied to the second memory range include maximum ECC bit coverage. Doing so may consume all metadata bits for the second memory range, leaving no additional metadata bits for other services for the second memory range.

As another example, a third memory range (e.g., memory pool 634a) may be focused on security. The third memory range may be a physical memory range and/or a virtual memory range that is mapped to a physical memory range. Therefore, in such an example, encryption services, isolation services, and reduced ECC services may be applied to the third memory range. Doing so provides less ECC bit coverage than the first and second memory ranges, but provides the encryption and isolation services. As another example, a fourth memory range (e.g., memory pool 634d) may be focused on scalability. The fourth memory range may be a physical memory range and/or a virtual memory range that is mapped to a physical memory range. Therefore, services allocated to the fourth memory range may include UPI and ECC services, while not including encryption and/or isolation services. Since some metadata bits may be allocated to UPI, full ECC bit coverage may not be provided to the fourth memory range.

As stated, the metadata coverage (and the services applied) to memory may be configured adaptively. For example, a tenant may specify to allocate encryption services to the first memory range, thereby reducing the ECC bit coverage for the first memory range. To do so, embodiments disclosed herein may update the memory metadata for the first memory range, e.g., via the management APIs 4088. In some embodiments, the adaptive configuration may occur based on different metrics. For example, the expected usage of a memory range may be used to determine which services to apply to the memory range. In some embodiments, the media monitor 618 of the platform 616 may determine the expected use of a given memory range. Therefore, for example, if the expected use of the first memory range exceeds a predetermined threshold, the platform 616 may reduce the number of ECC metadata bits allocated to the first memory range and apply throttling to the first memory range to reduce the use of the first memory range to reduce the likelihood of errors (e.g., by reducing thermal constraints on the memory.

QoS services provided by the computing system 600 may be expanded to understand the new address spaces disclosed herein (e.g., including the variable memory metadata). For example, if an application has bandwidth requirements, resiliency requirements, and isolation requirements, the platform 616 may provide the proper interleaving across memory pools 634a-634i to provide the required bandwidth, resiliency, and/or isolation services. One example of a platform 616 to provide QoS services is the Intel Resource Director Technology (RDT). Other examples of platforms 616 include the AMD^{®} Platform Quality of Service (PQoS) and ARM^{®} QoS Regulators.

As stated, the platform 616 may determine to change the memory metadata configuration for a memory range, e.g., via the management APIs 408 of the switch 404. For example, when the platform 616 may change the memory metadata configuration the media monitor 618 and/or the memory monitor 638 of the memory controller 320 to identify errors in the memory range exceeding an error threshold. As another example, the platform 616 may change the memory metadata configuration the media monitor 618 and/or determine the age of the media assigned to the memory range exceeds an age threshold. In yet another example, the platform 616 may change the memory metadata configuration by computing a probability value reflecting a likelihood that one or more memory ranges (and/or one or more physical memory units) will return errors (or otherwise fail). The probability value may therefore reflect a predicted error rate for a memory range. The probability value may be based on one or more of the age of the media, a count of previous errors encountered, QoS requirements, thermal conditions of the media, or any other attribute of the memory. In some embodiments, the platform 616 changes the memory metadata configuration based on a determination that the probability value exceeds a probability threshold. In some embodiments, the memory migrator 620 may instruct the accelerator 606 to move data from the memory range to another memory range in the CXL and memory complex 512 based on the platform 616 determining to modify the memory metadata configuration (e.g., to move the data to a memory pool that satisfies the requirements specified by the modified memory metadata configuration).

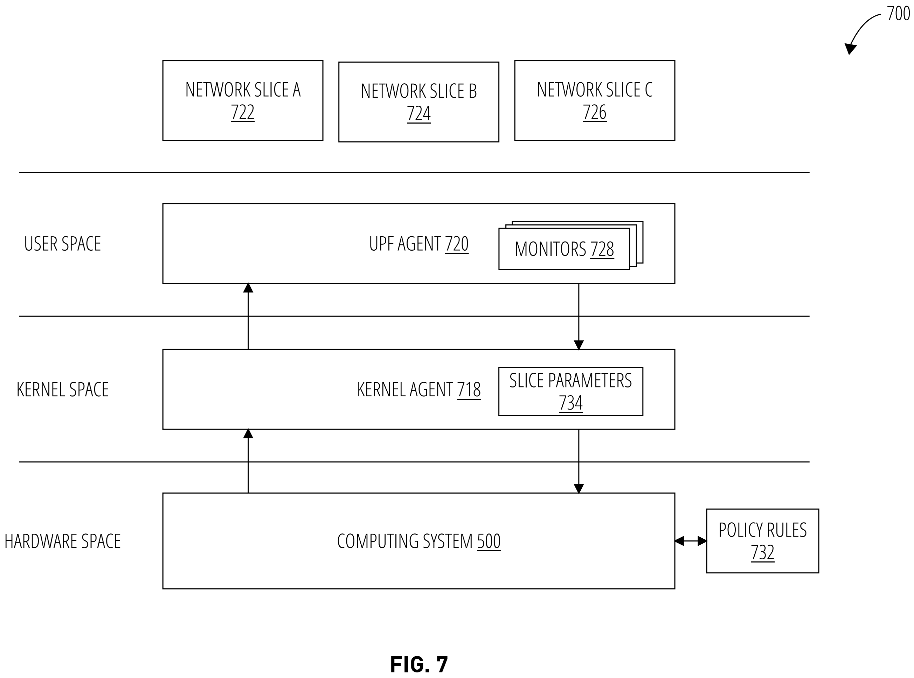

FIG. 7 illustrates a computing system 700. The computing system 700 is an example of a memory flow in a user plane function (UPF) of the core network 308 as managed by the OAM node 310. Embodiments are not limited to this example.

As depicted in FIG. 7, the computing system 700 comprises the computing system 500 operating in a hardware space, a kernel agent 718 operating in a kernel space, and a UPF agent 720 operating in a user space. The computing system 700 supports multiple network slice 316, such as network slice A 722, network slice B 724, and network slice C 726.

The UPF agent 720 operates in the user space on behalf of a UPF. The UPF is a component of the 5G Core Network architecture defined by the 3GPP standards. It handles user data traffic, which is the actual payload transmitted between end-users and external networks like the internet. Acting as a gateway, the UPF routes and forwards data packets between UE 304 and/or UE 306 (such as smartphones and IoT devices) and external data networks. Its key functions include packet routing and forwarding, Quality of Service (QoS) management, policy enforcement, lawful interception, traffic usage reporting, and mobility anchoring to maintain session continuity as users move across the network. Operating in the user plane, the UPF focuses on the transmission of user data, while the control plane manages signaling and control messages. This separation allows for greater flexibility, scalability, and efficiency in the network. The UPF works closely with the session management function (SMF) in the control plane to manage sessions and apply policies. This collaboration enables advanced features like network slicing, which allows multiple virtual networks on a single physical infrastructure, and supports edge computing and low-latency communications, which can be used for applications like autonomous vehicles and industrial automation.

The UPF agent 720 performs functions on behalf of the UPF, such as rescheduling of VNFs or pods based on error severity, indicate viability of non-uniform memory access (NUMA) region assignment to network slice 316 based on one or more slice parameters 734, such as slice priority, using memory RAS insights generated by one or more monitors 728, such as the error analyzer 526, the recommendation engine 528, the memory monitor 542, the media monitor 618, a QoS flow detector, sensors, and Other types of monitors. The UPF agent 720 may interoperate with the resource controller 318 to assign memory address ranges to the network slice 316. For example, as network slice A 722 is assigned a high priority, network slice B 724 is assigned a medium priority, and network slice C 726 is assigned a low priority. In this case, the UPF agent 720 may use the management APIs 234 and/or management APIs 408 to assign a memory address range for memory ranges configured for different services, such as a memory region 412 to the network slice A 722 that is error free memory (e.g., high number of ECC bits) and includes RAS error coalescing, a memory address range for a memory region 414 to the network slice B 724 that is error free memory and optionally includes RAS error coalescing, and a memory address range for a memory region 416 to the network slice C 726 that has no guarantees of error free memory (but may have Other services).

The UPF agent 720 performs a wide range of functions and has different features. Non-limiting examples of functions and features include a run time memory optimizer, a per flow 5G QoS, UPF IP filter rules, maps network slice 316 and operational parameters 312 (e.g., QoS parameters) to memory regions classified by reliability, provides classified RAS memory mapping rules based on QoS rules, interacts with HQoS/DLB on SPR core for details on memory mapping, updates topology managers (e.g., Kubernetes and the like) to schedule (or not schedule) on specific NUMA regions based on slice priority, and/or generates flags for maintenance based on predictive analytics of error log files 516. Non-limiting examples of Other functions and features may include correlate RAS memory management to UPF's memory mapping based on QoS & IP Filter rules within UPF, have memory utilization indicators across each slice to track memory regions being used by each slice, utilize RAS APIs to identify memory RAS actions being taken during memory errors, correlate the memory RAS error info with affected network slice, multiple RAS faults processed could be grouped and any corrective OS actions are taken only once per fault type minimizing interruption, affected network slice can be moved towards utilizing memory that is not prone for errors based on priority levels while a lower priority network slice can take its place, secure enclave regions associated with high priority slice with RAS errors would be triggered to migrate to reliable memory regions, and so forth. Based on UE hardware/software characteristics, flow characteristics and other capabilities, a UE 304 and/or UE 306 can decide to choose best available slice for flows using NSSAI values. For example, based on ASIL values, software characteristics, such as non-deterministic or deterministic use case processing in the UE, the UE may choose its memory capability (e.g., Amazon Freertos can choose among 5 memory configurations based on use cases), use cases, and so forth. Embodiments are not limited to these examples.

The UPF agent 720 communicates with the kernel agent 718 operating in the kernel space. The kernel agent 718 communicates with the computing system 500 via one or more management APIs 234 and/or management APIs 408, such as a RAS API with error and memory address information. The computing system 500 allocates memory resources based on operational parameters 312 defined in one or more out-of-band (OOB) policy rules 732, monitors memory resources for memory events 324, monitors OOB memory RAS API consumption, handles interrupt requests 328 caused by memory events 324, diagnoses memory errors, makes memory recommendations, and performs other functions and features that supports the network slice 316 of the wireless network 300.

By way of example, the UPF agent 720 may correlate memory regions used by each of network slice A 722, network slice B 724, and network slice C 726 to memory RAS errors within a memory region, such as types, count, severity, and so forth. This may be accomplished using RAS API and RAS logs from hardware devices. For example, high level memory RAS counters may be implemented using a Linux RAS Daemon, while detailed RAS memory error information is provided by error detection and correction (EDAC) driver and EDAC logs. The UPF agent 720 may also assign different set of functions or features to network slice 316 based on various operational parameters 312, such as a priority level assigned to a given slice.

In some embodiments, for a high priority slice such as the network slice A 722, the memory controller 320 and/or memory microcontroller 506 may implement functions or features such as coalescing multiple errors across a set time period to act, avoiding or reducing taking corrective actions when a severity of memory error is low (e.g., compared to a threshold) of if no users are associated with the network slice A 722 (e.g., during idle time), triggering the OS 608 to assign new error free memory region, triggering transfer of execution to new memory region (e.g., using memcopy), marking certain memory regions as not suitable for utilization for a high priority slice, and so forth.

In some embodiments, for a low priority slice such as the network slice C 726, the memory controller 320 and/or memory microcontroller 506 may implement functions or features such as coalescing multiple errors across a set time period to act only once, taking corrective actions based on a severity of memory error, triggering the OS 608 to assign new error free memory region if available, triggering orchestration to move away from utilizing the low priority slice, marking memory regions to be utilized by the low priority slice if needed, and so forth.

To reduce or minimize any interruption that can impact sensitive workloads/services, the kernel agent 718 can allocate temporary or additional memory during the repair time based on QoS/SLA of the slice. An example of a telemetry correlation capability in UPF agent 720 may include tracking the memory used to store active users flows and state information and monitoring for RAS/EDAC errors. When a fault is detected the Network Slice RAS Resource Controller can route new users to appropriately reliable memory based on the user SLA, and copy existing users with high SLA to more reliable memory as a resiliency feature. This can be a new resiliency component in addition to the Network Slice RAS resource controller 318 or part of that component. The behaviors can be triggered based on a pre-defined policy.

The computing system 700 maps network slice 316 to memory regions (e.g., 410, 412, 414, 416, etc.) based on reliability. The assignment is in addition to existing resiliency and high availability (HA) schemes, which are designed to protect UE flows at access nodes (e.g., base stations and gateway functions, such as 1+1, 1+N, N:M, standards based Gateway distribution, etc.). In this manner, the computing system 700 deals specifically with protecting flows using memory controller features, once assigned to an element., independent of other resiliency schemes.

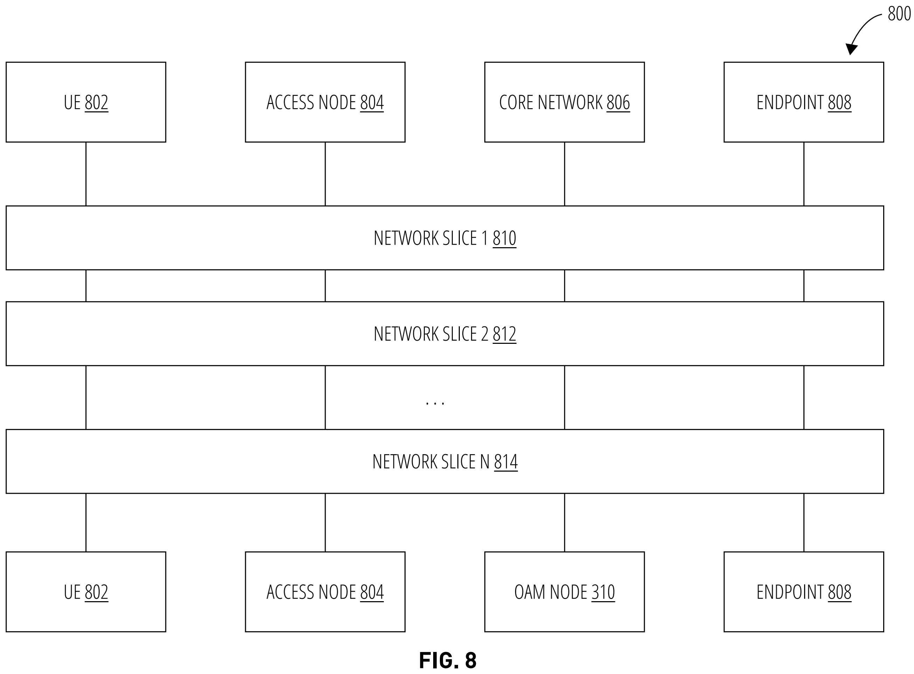

FIG. 8 illustrates a logic diagram 800. The logic diagram 800 is an example of an integration of RAS based memory flows in a virtualized network function 314, such as a UPF, of the core network 308 in an end-to-end scenario. Embodiments are not limited to this example.

As depicted in FIG. 8, a UE 802 communicates with an endpoint 808 over a network slice, such as network slice 1 810, network slice 2 812, or network slice N 814, where N represents any positive integer. The endpoint 808 could be another UE or a software or hardware entity. Each network slice forms a virtual network (e.g., a SDN or SON) that allocates physical resources across an access node 804 and the core network 806. The OAM node 310 may allocate the physical resources to each network slice using a resource allocation scheme and a set of operational parameters 312, such as priority level, application type, service type, and so forth. For example, the OAM node 310 may allocate high-resiliency and lower error rate memory regions to higher priority slices and low-resiliency and higher error rate memory regions to lower priority slices, using the computing system 700. This can be further tied with the slices with different category of flows, such as critical guaranteed bit rate (GBR), GBR, non-GBR (e.g., best effort), or other use cases such as enhanced mobile broadband (EMBB), ultra-reliable low-latency communications (URLLC), and massive machine-type communications (mMTC), and Other 3GPP and non-3GPP systems.

In some embodiments, the computing system 700 may be implemented for flow based QoS at a UPF downlink, an access node such as a gNB, and/or a UE using a DPDK based UPF deployment. For example, the resource controller 318 may be implemented as a network slick RAS resource controller 318 that maps QoS levels to RAS classified memory mapping rules. The resource controller 318 may allocate resources to a UPF cluster as part of a classifier and DPDK H-QoS engine to map network slice 316 and QoS parameters to memory regions classified by reliability.

Operations for the disclosed embodiments may be further described with reference to the following figures. Some of the figures may include a logic flow. Although such figures presented herein may include a particular logic flow, it can be appreciated that the logic flow merely provides an example of how the general functionality as described herein can be implemented. Further, a given logic flow does not necessarily have to be executed in the order presented unless otherwise indicated. Moreover, not all acts illustrated in a logic flow may be required in some embodiments. In addition, the given logic flow may be implemented by a hardware element, a software element executed by a processor, or any combination thereof. The embodiments are not limited in this context.

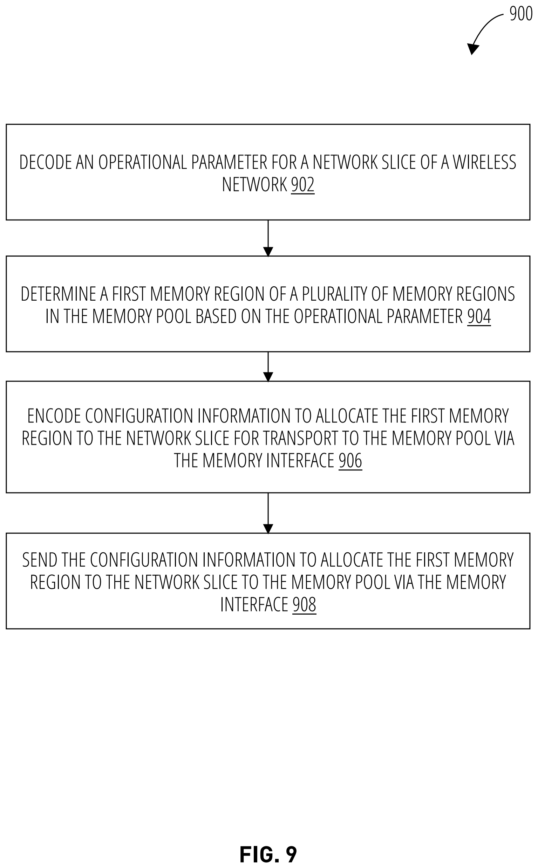

FIG. 9 illustrates an embodiment of a logic flow 900. The logic flow 900 may be representative of some or all of the operations executed by one or more embodiments described herein. For example, the logic flow 900 may include some or all of the operations performed by devices or entities within the computer system 200, wireless network 300, memory system 400, computing system 500, computing system 600, computing system 700, and logic diagram 800. More particularly, the logic flow 900 illustrates a use case where the wireless network 300 allocates resources to virtualized network function 314 and/or network slice 316. Embodiments are not limited in this context.

In block 902, logic flow 900 accesses an operational parameter for a network slice of a wireless network. In block 904, logic flow 900 determines a first memory region of a plurality of memory regions in the memory pool based on the operational parameter. In block 906, logic flow 900 encodes configuration information to allocate the first memory region to the network slice to the memory pool via the memory interface. In block 908, logic flow 900 sends the configuration information to allocate the first memory region to the network slick to the memory pool via the memory interface.

By way of example, in some embodiments, an apparatus for a memory controller 320 (e.g., of an OAM node 310 or core network 308), includes a memory interface 424 to a memory pool 428. The apparatus also includes processor circuitry 602 for a memory controller 320 operable to access an operational parameter 312 for a network slice 316 of a wireless network 300, determine a first memory region 410a of a plurality of memory regions in the memory pool 428 based on the operational parameter 312, and encode configuration information 430 to allocate the first memory region 410a to the network slice 316.

The apparatus may also include where the network slice 316 includes a logical network assigned a set of physical resource elements 232 of a computer system 200, and the logical network includes a set of one or more virtualized network functions 314 of a core network 308 of the wireless network 300.

The apparatus may also include where the operational parameter 312 is a memory reliability parameter, the first memory region 410a is determined based on metadata for the first memory region 410a, and the metadata represents a configuration associated with a number of error correction code (ECC) bits.

The apparatus may also include a bus interface 520 for a sideband bus 518, the processor circuitry 602 for the memory controller 320 to detect a memory event 324 for the first memory region 410a, generate an interrupt request 328 for the memory event 324, and encode the interrupt request 328 for transport to a memory microcontroller 506 over the sideband bus 518 via the bus interface 520.

The apparatus may also include the processor circuitry 602 for the memory controller 320 to decode a request for a set of error log files 516 for the first memory region 410a received from the memory microcontroller 506 over the sideband bus 518 via the bus interface 520, and encode a response with the set of error log files 516 for transport over the sideband bus 518 via the bus interface 520.

The apparatus may also include the processor circuitry 602 for the memory controller 320 to decode data for a memory action 530 for the first memory region 410a received from the memory microcontroller 506 over the sideband bus 518 via the bus interface 520, and modify configuration information 430 (e.g., metadata) of the first memory region 410a from a first configuration to a second configuration based on the data for the memory action 530, where the first configuration is associated with a first number of error correction code (ECC) bits and the second configuration is associated with a second number of ECC bits.

The apparatus may also include the processor circuitry 602 for the memory controller 320 to decode data for a memory action 530 for the first memory region 410a received from the memory microcontroller 506 over the sideband bus 518 via the bus interface 520, determine a second memory region 410b of the plurality of memory regions in the memory pool 428 based on the data for the memory action 530, and encode configuration information 430 to allocate the second memory region 410b to the network slice 316 for transport to the memory pool 428 via the memory interface 424.

By way of example, in some embodiments, an apparatus for a memory microcontroller 506 (e.g., of an OAM node 310 or core network 308), includes a bus interface 522 for a sideband bus 518. The apparatus also includes processor circuitry 602 for a memory microcontroller 506 operable to decode an interrupt request 328 for a memory event 324 for a memory region 410a allocated to a network slice 316 of a wireless network 300 received from a memory controller 320 over the sideband bus 518 via the bus interface 522, coalesce the memory event 324 with a set of memory events 324 for the memory region 410a, analyze the set of memory events 324 for the memory region 410a for a shared memory event 544, generate data for a memory action 530 for the memory region 410a, and encode the data for the memory action 530 for transport over the sideband bus 518 via the bus interface 522.

The apparatus may also include the processor circuitry 602 for the memory microcontroller 506 to encode a request for a set of error log files 516 for transport to the memory controller 320 over the sideband bus 518 via the bus interface 522, decode a response with the set of error log files 516 received from the memory controller 320 over the sideband bus 518 via the bus interface 522, and retrieve the set of memory events 324 for the memory region 410a from the set of error log files 516.

The apparatus may also include the processor circuitry 602 for the memory microcontroller 506 to analyze the set of memory events 324 for the memory region 410a for the shared memory event 544 using a machine learning (ML) model.

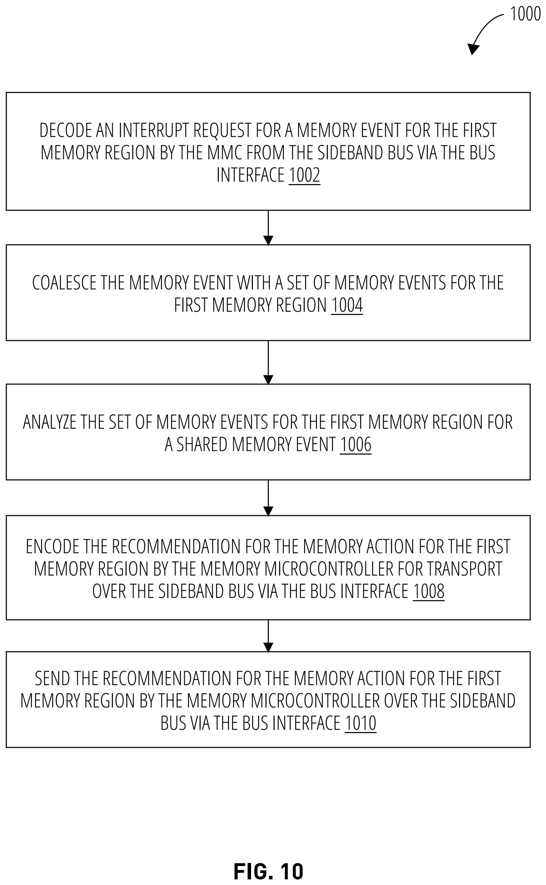

FIG. 10 illustrates an embodiment of a logic flow 1000. The logic flow 1000 may be representative of some or all of the operations executed by one or more embodiments described herein. For example, the logic flow 1000 may include some or all of the operations performed by devices or entities within the computer system 200, wireless network 300, memory system 400, computing system 500, computing system 600, computing system 700, and logic diagram 800. More particularly, the logic flow 1000 illustrates a use case where the wireless network 300 allocates resources to virtualized network function 314 and/or network slice 316, analyzes error records 534 for a shared memory event 544, and recommends a memory action 530 based on the shared memory event 544. Embodiments are not limited in this context.

In block 1002, logic flow 1000 decodes an interrupt request for a memory event for the first memory region by the MMC from the sideband bus via the bus interface. In block 1004, logic flow 1000 coalesces the memory event with a set of memory events for the first memory region. In block 1006, logic flow 1000 analyzes the set of memory events for the first memory region for a shared memory event. In block 1008, logic flow 1000 encodes the recommendation for the memory action for the first memory region by the memory controller for transport over the sideband bus via the bus interface. In block 1010, logic flow 1000 sends the recommendation for the memory action for the first memory region by the memory controller over the sideband bus via the bus interface.

By way of example, in some embodiments, an apparatus for a memory microcontroller 506 (e.g., of an OAM node 310 or core network 308) comprises an interface 522 and processor circuitry 602 operable to decode an interrupt request 328 for a memory event 324 for the first memory region 410a from the sideband bus 518 via the bus interface 522. The processor circuitry 602 coalesces the memory event 324 with a set of memory events 324 for the first memory region 410a. The processor circuitry 602 analyzes the set of memory events 324 for the first memory region 410a for a shared memory event 544. The processor circuitry 602 encodes data for the recommendation for the memory action 530 for the first memory region 410a by the memory microcontroller 506 for transport over the sideband bus 518 via the bus interface 522. The processor circuitry 602 sends the recommendation for the memory action 530 for the first memory region 410a from the memory microcontroller 506 over the sideband bus 518 via the bus interface 522.

FIG. 11 illustrates an example of a wireless communication wireless communications system 1100. For purposes of convenience and without limitation, the example wireless communications system 1100 is described in the context of the long-term evolution (LTE) and fifth generation (5G) new radio (NR) (5G NR) cellular networks communication standards as defined by one or more 3GPP TS 38.133 Standards, 3GPP 38.331 Standards, or Other 3GPP standards or specifications. However, other types of wireless standards are possible as well.

The wireless communications system 1100 supports two classes of UE devices, including a reduced capability (RedCap) UE 1102a and standard UE 1102b (collectively referred to as the "UEs 102"). In one embodiment, the UE 1102a may have a set of one or more reduced capabilities relative to a set of standard capabilities of the standard UE 1102b. Examples of reduced capabilities may include without limitation: (1) 20 megahertz (MHz) in sub-7 gigahertz (GHz) or 1100 MHz in millimeter wave (mmWave) frequency bands; (2) a single transmit (Tx) antenna (1 Tx); (3) a single receive (Rx) antenna (1 Rx), with 2 antennas (2 Rx) being optional; (4) optional support for half-duplex FDD; (5) lower-order modulation, with 256-quadrature amplitude modulation (QAM) being optional; and (6) support for lower transmit power. In one embodiment, for example, the standard UE 1102b may have a 2 Rx antenna, while the UE 1102a may only have a 1 Rx antenna. The UE 1102a may have other reduced capabilities as well. Embodiments are not limited in this context.

In this example, the UEs 102 are illustrated as smartphones (e.g., handheld touchscreen mobile computing devices connectable to one or more cellular networks). In Other examples, any of the UEs 102 can include Other mobile or non-mobile computing devices, such as consumer electronics devices, cellular phones, smartphones, feature phones, tablet computers, wearable computer devices, personal digital assistants (PDAs), pagers, wireless handsets, desktop computers, laptop computers, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, machine-type communications (MTC) devices, machine-to-machine (M2M) devices, Internet of Things (IoT) devices, or combinations of them, among Others.

In some implementations, any of the UEs 102 may be IoT UEs, which can include a network access layer designed for low-power IoT applications utilizing short-lived UE connections. An IoT UE can utilize technologies such as M2M or MTC for exchanging data with an MTC server or device using, for example, a public land mobile network (PLMN), proximity services (ProSe), device-to-device (D2D) communication, sensor networks, IoT networks, or combinations of them, among Others. The M2M or MTC exchange of data may be a machine-initiated exchange of data. An IoT network describes interconnecting IoT UEs, which can include uniquely identifiable embedded computing devices (within the Internet infrastructure), with short-lived connections. The IoT UEs may execute background applications (e.g., keep-alive messages or status updates) to facilitate the connections of the IoT network.

The UEs 102 are configured to connect (e.g., communicatively couple) with a radio access network (RAN) 1112. In some implementations, the RAN 1112 may be a next generation RAN (NG RAN), an evolved UMTS terrestrial radio access network (E-UTRAN), or a legacy RAN, such as a UMTS terrestrial radio access network (UTRAN) or a GSM EDGE radio access network (GERAN). As used herein, the term "NG RAN" may refer to a RAN 1112 that operates in a 5G NR wireless communications system 1100, and the term "E-UTRAN" may refer to a RAN 1112 that operates in an LTE or 4G wireless communications system 1100.

To connect to the RAN 1112, the UEs 102 utilize connections (or channels) 1118 and 1120, respectively, each of which can include a physical communications interface or layer, as described below. In this example, the connections 1118 and 1120 are illustrated as an air interface to enable communicative coupling, and can be consistent with cellular communications protocols, such as a global system for mobile communications (GSM) protocol, a code-division multiple access (CDMA) network protocol, a push-to-talk (PTT) protocol, a PTT over cellular (POC) protocol, a universal mobile telecommunications system (UMTS) protocol, a 3GPP LTE protocol, a 5G NR protocol, or combinations of them, among Other communication protocols.

The UE 1102b is shown to be configured to access an access point (AP) 1104 (also referred to as "WLAN node 1104," "WLAN 1104," "WLAN Termination 1104," "WT 1104" or the like) using a connection 1122. The connection 1122 can include a local wireless connection, such as a connection consistent with any IEEE 802.11 protocol, in which the AP 1104 would include a wireless fidelity (Wi-Fi) router. In this example, the AP 1104 is shown to be connected to the Internet without connecting to the core network of the wireless system, as described in further detail below.

The RAN 1112 can include one or more nodes such as RAN nodes 1106a and 1106b that enable the connections 1118 and 1120. The description provided herein for RAN node 1106a may be applicable to RAN node 1106b, and vice-versa. As used herein, the terms "access node," "access point," or the like may describe equipment that provides the radio baseband functions for data or voice connectivity, or both, between a network and one or more users. These access nodes can be referred to as base stations (BS), gNodeBs, gNBs, eNodeBs, eNBs, NodeBs, RAN nodes, rode side units (RSUs), transmission reception points (TRxPs or TRPs), and the link, and can include ground stations (e.g., terrestrial access points) or satellite stations providing coverage within a geographic area (e.g., a cell), among Others. As used herein, the term "NG RAN node" may refer to a RAN node 1106a that operates in an 5G NR wireless communications system 1100 (for example, a gNB), and the term "E-UTRAN node" may refer to a RAN node 106 that operates in an LTE or 4G wireless communications system 1100 (e.g., an eNB). In some implementations, the RAN nodes 106 may be implemented as one or more of a dedicated physical device such as a macrocell base station, or a low power (LP) base station for providing femtocells, picocells or Other like cells having smaller coverage areas, smaller user capacity, or higher bandwidth compared to macrocells.

In some implementations, some or all of the RAN nodes 1106a may be implemented as one or more software entities running on server computers as part of a virtual network, which may be referred to as a cloud RAN (CRAN) or a virtual baseband unit pool (vBBUP). The CRAN or vBBUP may implement a RAN function split, such as a packet data convergence protocol (PDCP) split in which radio resource control (RRC) and PDCP layers are operated by the CRAN/vBBUP and Other layer two (e.g., data link layer) protocol entities are operated by individual RAN nodes 1106a; a medium access control (MAC)/physical layer (PHY) split in which RRC, PDCP, MAC, and radio link control (RLC) layers are operated by the CRAN/vBBUP and the PHY layer is operated by individual RAN nodes 106; or a "lower PHY" split in which RRC, PDCP, RLC, and MAC layers and upper portions of the PHY layer are operated by the CRAN/vBBUP and lower portions of the PHY layer are operated by individual RAN nodes 1106a. This virtualized framework allows the freed-up processor cores of the RAN nodes 1106a to perform, for example, Other virtualized applications. In some implementations, an individual RAN node 106 may represent individual gNB distributed units (DUs) that are connected to a gNB central unit (CU) using individual F1 interfaces (not shown in FIG. 11). In some implementations, the gNB-DUs can include one or more remote radio heads or RFEMs, and the gNB-CU may be operated by a server that is located in the RAN 1112 (not shown) or by a server pool in a similar manner as the CRAN/vBBUP. Additionally or alternatively, one or more of the RAN nodes 1106a may be next generation eNBs (ng-eNBs), including RAN nodes that provide E-UTRA user plane and control plane protocol terminations toward the UEs 1102a, and are connected to a 5G core network (e.g., core network 1114) using a next generation interface.

In vehicle-to-everything (V2X) scenarios, one or more of the RAN nodes 1106a may be or act as RSUs. The term "Road Side Unit" or "RSU" refers to any transportation infrastructure entity used for V2X communications. A RSU may be implemented in or by a suitable RAN node or a stationary (or relatively stationary) UE, where a RSU implemented in or by a UE may be referred to as a "UE-type RSU," a RSU implemented in or by an eNB may be referred to as an "eNB-type RSU," a RSU implemented in or by a gNB may be referred to as a "gNB-type RSU," and the like. In some implementations, an RSU is a computing device coupled with radio frequency circuitry located on a roadside that provides connectivity support to passing vehicle UEs 102 (vUEs 102). The RSU may also include internal data storage circuitry to store intersection map geometry, traffic statistics, media, as well as applications or other software to sense and control ongoing vehicular and pedestrian traffic. The RSU may operate on the 5.9 GHz Direct Short Range Communications (DSRC) band to provide very low latency communications required for high speed events, such as crash avoidance, traffic warnings, and the like. Additionally or alternatively, the RSU may operate on the cellular V2X band to provide the aforementioned low latency communications, as well as Other cellular communications services. Additionally or alternatively, the RSU may operate as a Wi-Fi hotspot (2.4 GHz band) or provide connectivity to one or more cellular networks to provide uplink and downlink communications, or both. The computing device(s) and some or all of the radiofrequency circuitry of the RSU may be packaged in a weatherproof enclosure suitable for outdoor installation, and can include a network interface controller to provide a wired connection (e.g., Ethernet) to a traffic signal controller or a backhaul network, or both.

Any of the RAN nodes 1106a can terminate the air interface protocol and can be the first point of contact for the UEs 1102a. In some implementations, any of the RAN nodes 1106a can fulfill various logical functions for the RAN 1112 including, but not limited to, radio network controller (RNC) functions such as radio bearer management, uplink and downlink dynamic radio resource management and data packet scheduling, and mobility management.

In some implementations, the UEs 1102a can be configured to communicate using orthogonal frequency division multiplexing (OFDM) communication signals with each Other or with any of the RAN nodes 106 over a multicarrier communication channel in accordance with various communication techniques, such as, but not limited to, OFDMA communication techniques (e.g., for downlink communications) or SC-FDMA communication techniques (e.g., for uplink communications), although the scope of the techniques described here not limited in this respect. The OFDM signals can comprise a plurality of orthogonal subcarriers.

The RAN nodes 1106a can transmit to the UEs 1102a over various channels. Various examples of downlink communication channels include Physical Broadcast Channel (PBCH), Physical Downlink Control Channel (PDCCH), and Physical Downlink Shared Channel (PDSCH). Other types of downlink channels are possible. The UEs 102 can transmit to the RAN nodes 106 over various channels. Various examples of uplink communication channels include Physical Uplink Shared Channel (PUSCH), Physical Uplink Control Channel (PUCCH), and Physical Random Access Channel (PRACH). Other types of uplink channels are possible.

In some implementations, a downlink resource grid can be used for downlink transmissions from any of the RAN nodes 1106a to the UEs 1102a, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The PDSCH carries user data and higher-layer signaling to the UEs 1102a. The PDCCH carries information about the transport format and resource allocations related to the PDSCH channel, among other things. It may also inform the UEs 1102a about the transport format, resource allocation, and hybrid automatic repeat request (HARQ) information related to the uplink shared channel. Downlink scheduling (e.g., assigning control and shared channel resource blocks to the UE 1102b within a cell) may be performed at any of the RAN nodes 1106a based on channel quality information fed back from any of the UEs 1102a. The downlink resource assignment information may be sent on the PDCCH used for (e.g., assigned to) each of the UEs 1102a.

The PDCCH uses control channel elements (CCEs) to convey the control information. Before being mapped to resource elements, the PDCCH complex-valued symbols may first be organized into quadruplets, which may then be permuted using a sub-block interleaver for rate matching. In some implementations, each PDCCH may be transmitted using one or more of these CCEs, in which each CCE may correspond to nine sets of four physical resource elements collectively referred to as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. In LTE, there can be four or more different PDCCH formats defined with different numbers of CCEs (e.g., aggregation level, L=1, 2, 4, or 8).

Some implementations may use concepts for resource allocation for control channel information that are an extension of the above-described concepts. For example, some implementations may utilize an enhanced PDCCH (EPDCCH) that uses PDSCH resources for control information transmission. The EPDCCH may be transmitted using one or more enhanced CCEs (ECCEs). Similar to above, each ECCE may correspond to nine sets of four physical resource elements collectively referred to as an enhanced REG (EREG). An ECCE may have other numbers of EREGs.

The RAN nodes 1106a are configured to communicate with one another using an interface 1132. In examples, such as where the wireless communications system 1100 is an LTE system (e.g., when the core network 1114 is an evolved packet core (EPC) network), the interface 1132 may be an X2 interface 1132. The X2 interface may be defined between two or more RAN nodes 106 (e.g., two or more eNBs and the like) that connect to the EPC 1114, or between two eNBs connecting to EPC 1114, or both. In some implementations, the X2 interface can include an X2 user plane interface (X2-U) and an X2 control plane interface (X2-C). The X2-U may provide flow control mechanisms for user data packets transferred over the X2 interface, and may be used to communicate information about the delivery of user data between eNBs. For example, the X2-U may provide specific sequence number information for user data transferred from a master eNB to a secondary eNB; information about successful in sequence delivery of PDCP protocol data units (PDUs) to a UE 1102a from a secondary eNB for user data; information of PDCP PDUs that were not delivered to a UE 1102a; information about a current minimum desired buffer size at the secondary eNB for transmitting to the UE user data, among other information. The X2-C may provide intra-LTE access mobility functionality, including context transfers from source to target eNBs or user plane transport control; load management functionality; inter-cell interference coordination functionality, among other functionality.

In some implementations, such as where the wireless communications system 1100 is a 5G NR system (e.g., when the core network 1114 is a 5G core network), the interface 1132 may be an Xn interface 1132. The Xn interface may be defined between two or more RAN nodes 106 (e.g., two or more gNBs and the like) that connect to the 5G core network 1114, between a RAN node 106 (e.g., a gNB) connecting to the 5G core network 1114 and an eNB, or between two eNBs connecting to the 5G core network 1114, or combinations of them. In some implementations, the Xn interface can include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 1102a in a connected mode (e.g., CM-CONNECTED) including functionality to manage the UE mobility for connected mode between one or more RAN nodes 1106a, among other functionality. The mobility support can include context transfer from an old (source) serving RAN node 1106a to new (target) serving RAN node 1106a, and control of user plane tunnels between old (source) serving RAN node 1106a to new (target) serving RAN node 1106a. A protocol stack of the Xn-U can include a transport network layer built on Internet Protocol (IP) transport layer, and a GPRS tunneling protocol for user plane (GTP-U) layer on top of a user datagram protocol (UDP) or IP layer(s), or both, to carry user plane PDUs. The Xn-C protocol stack can include an application layer signaling protocol (referred to as Xn Application Protocol (Xn-AP or XnAP)) and a transport network layer (TNL) that is built on a stream control transmission protocol (SCTP). The SCTP may be on top of an IP layer, and may provide the guaranteed delivery of application layer messages. In the transport IP layer, point-to-point transmission is used to deliver the signaling PDUs. In Other implementations, the Xn-U protocol stack or the Xn-C protocol stack, or both, may be same or similar to the user plane and/or control plane protocol stack(s) shown and described herein.

The RAN 1112 is shown to be communicatively coupled to a core network 1114 (referred to as a "CN 1114"). The CN 1114 includes multiple network elements, such as network element 108a and network element 1108b (collectively referred to as the "network elements 1008"), which are configured to offer various data and telecommunications services to customers/subscribers (e.g., users of UEs 1102a) who are connected to the CN 1114 using the RAN 1112. The components of the CN 1114 may be implemented in one physical node or separate physical nodes and can include components to read and execute instructions from a machine-readable or computer-readable medium (e.g., a non-transitory machine-readable storage medium). In some implementations, network functions virtualization (NFV) may be used to virtualize some or all of the network node functions described here using executable instructions stored in one or more computer-readable storage mediums, as described in further detail below. A logical instantiation of the CN 1114 may be referred to as a network slice, and a logical instantiation of a portion of the CN 1114 may be referred to as a network sub-slice. NFV architectures and infrastructures may be used to virtualize one or more network functions, alternatively performed by proprietary hardware, onto physical resources comprising a combination of industry-standard server hardware, storage hardware, or switches. In Other words, NFV systems can be used to execute virtual or reconfigurable implementations of one or more network components or functions, or both.

An application server 1110 may be an element offering applications that use IP bearer resources with the core network (e.g., UMTS packet services (PS) domain, LTE PS data services, among Others). The application server 1110 can also be configured to support one or more communication services (e.g., VoIP sessions, PTT sessions, group communication sessions, social networking services, among Others) for the UEs 1102a using the CN 1114. The application server 1110 can use an IP communications interface 1130 to communicate with one or more network elements 1108a.

In some implementations, the CN 1114 may be a 5G core network (referred to as "5GC 1114" or "5G core network 1114"), and the RAN 1112 may be connected with the CN 1114 using a next generation interface 1124. In some implementations, the next generation interface 1124 may be split into two parts, a next generation user plane (NG-U) interface 1114, which carries traffic data between the RAN nodes 1106a and a user plane function (UPF), and the S1 control plane (NG-C) interface 1126, which is a signaling interface between the RAN nodes 106 and access and mobility management functions (AMFs). Examples where the CN 1114 is a 5G core network are discussed in more detail with regard to later figures.

In some implementations, the CN 1114 may be an EPC (referred to as "EPC 1114" or the like), and the RAN 1112 may be connected with the CN 1114 using an S1 interface 1124. In some implementations, the S1 interface 1124 may be split into two parts, an S1 user plane (S1-U) interface 1128, which carries traffic data between the RAN nodes 106 and the serving gateway (S-GW), and the S1-MME interface 1126, which is a signaling interface between the RAN nodes 106 and mobility management entities (MMEs).

As previously discussed, in some implementations, an individual RAN node 1106a may be implemented as a gNB dual-architecture comprising multiple gNB-DUs that are connected to a gNB-CU using individual F1 interfaces.

FIG. 12 illustrates an embodiment of a system 1200. System 1200 is a computer system with multiple processor cores such as a distributed computing system, supercomputer, high-performance computing system, computing cluster, mainframe computer, mini-computer, client-server system, personal computer (PC), workstation, server, portable computer, laptop computer, tablet computer, handheld device such as a personal digital assistant (PDA), or other device for processing, displaying, or transmitting information. Similar embodiments may comprise, e.g., entertainment devices such as a portable music player or a portable video player, a smart phone or other cellular phone, a telephone, a digital video camera, a digital still camera, an external storage device, or the like. Further embodiments implement larger scale server configurations. In other embodiments, the system 1200 may have a single processor with one core or more than one processor. Note that the term "processor" refers to a processor with a single core or a processor package with multiple processor cores. In at least one embodiment, the computing system 1200 is representative of the components of FIGS. 1-11. More generally, the computing system 1200 is configured to implement all logic, systems, logic flows, methods, apparatuses, and functionality described herein with reference to FIGS. 1-11.

As used in this application, the terms "system" and "component" and "module" are intended to refer to a computer-related entity, either hardware, a combination of hardware and software, software, or software in execution, examples of which are provided by the exemplary system 1200. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the uni-directional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

As shown in FIG. 12, system 1200 comprises a system-on-chip (SoC) 1202 for mounting platform components. System-on-chip (SoC) 1202 is a point-to-point (P2P) interconnect platform that includes a first processor 1204 and a second processor 1206 coupled via a point-to-point interconnect 1270 such as an Ultra Path Interconnect (UPI). In other embodiments, the system 1200 may be of another bus architecture, such as a multidrop bus. Furthermore, each of processor 1204 and processor 1206 may be processor packages with multiple processor cores including core(s) 1208 and core(s) 1210, respectively. While the system 1200 is an example of a two-socket (2S) platform, other embodiments may include more than two sockets or one socket. For example, some embodiments may include a four-socket (4S) platform or an eight-socket (8S)
platform. Each socket is a mount for a processor and may have a socket identifier. Note that the term platform may refers to a motherboard with certain components mounted such as the processor 1204 and chipset 1232. Some platforms may include additional components and some platforms may only include sockets to mount the processors and/or the chipset. Furthermore, some platforms may not have sockets (e.g. SoC, or the like). Although depicted as a SoC 1202, one or more of the components of the SoC 1202 may also be included in a single die package, a multi-chip module (MCM), a multi-die package, a chiplet, a bridge, and/or an interposer. Therefore, embodiments are not limited to a SoC.

The processor 1204 and processor 1206 can be any of various commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®} and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures may also be employed as the processor 1204 and/or processor 1206. Additionally, the processor 1204 need not be identical to processor 1206.

Processor 1204 includes an integrated memory controller (IMC) 1220 and point-to-point (P2P) interface 1224 and P2P interface 1228. Similarly, the processor 1206 includes an IMC 1222 as well as P2P interface 1226 and P2P interface 1230. IMC 1220 and IMC 1222 couple the processor 1204 and processor 1206, respectively, to respective memories (e.g., memory 1216 and memory 1218). Memory 1216 and memory 1218 may be portions of the main memory (e.g., a dynamic random-access memory (DRAM)) for the platform such as double data rate type 4 (DDR4) or type 5 (DDR5) synchronous DRAM (SDRAM). In the present embodiment, the memory 1216 and the memory 1218 locally attach to the respective processors (i.e., processor 1204 and processor 1206). In other embodiments, the main memory may couple with the processors via a bus and shared memory hub. Processor 1204 includes registers 1212 and processor 1206 includes registers 1214.

System 1200 includes chipset 1232 coupled to processor 1204 and processor 1206. Furthermore, chipset 1232 can be coupled to storage device 1250, for example, via an interface (I/F) 1238. The I/F 1238 may be, for example, a Peripheral Component Interconnect-enhanced (PCIe) interface, a Compute Express Link ^{®} (CXL) interface, or a Universal Chiplet Interconnect Express (UCIe) interface. Storage device 1250 can store instructions executable by circuitry of system 1200 (e.g., processor 1204, processor 1206, GPU 1248, accelerator 1254, vision processing unit 1256, or the like). For example, storage device 1250 can store instructions for any previous embodiments and/or examples described herein, or the like.

Processor 1204 couples to the chipset 1232 via P2P interface 1228 and P2P 1234 while processor 1206 couples to the chipset 1232 via P2P interface 1230 and P2P 1236. Direct media interface (DMI) 1276 and DMI 1278 may couple the P2P interface 1228 and the P2P 1234 and the P2P interface 1230 and P2P 1236, respectively. DMI 1276 and DMI 1278 may be a high-speed interconnect that facilitates, e.g., eight Giga Transfers per second (GT/s) such as DMI 3.0. In other embodiments, the processor 1204 and processor 1206 may interconnect via a bus.

The chipset 1232 may comprise a controller hub such as a platform controller hub (PCH). The chipset 1232 may include a system clock to perform clocking functions and include interfaces for an I/O bus such as a universal serial bus (USB), peripheral component interconnects (PCIs), CXL interconnects, UCIe interconnects, interface serial peripheral interconnects (SPIs), integrated interconnects (I2Cs), and the like, to facilitate connection of peripheral devices on the platform. In other embodiments, the chipset 1232 may comprise more than one controller hub such as a chipset with a memory controller hub, a graphics controller hub, and an input/output (I/O) controller hub.

In the depicted example, chipset 1232 couples with a trusted platform module (TPM) 1244 and UEFI, BIOS, FLASH circuitry 1246 via I/F 1242. The TPM 1244 is a dedicated microcontroller designed to secure hardware by integrating cryptographic keys into devices. The UEFI, BIOS, FLASH circuitry 1246 may provide pre-boot code.

Furthermore, chipset 1232 includes the I/F 1238 to couple chipset 1232 with a high-performance graphics engine, such as, graphics processing circuitry or a graphics processing unit (GPU) 1248. In Other embodiments, the system 1200 may include a flexible display interface (FDI) (not shown) between the processor 1204 and/or the processor 1206 and the chipset 1232. The FDI interconnects a graphics processor core in one or more of processor 1204 and/or processor 1206 with the chipset 1232.

The system 1200 is operable to communicate with wired and wireless devices or entities via the network interface (NIC) 180 using the IEEE 802 family of standards, such as wireless devices operatively disposed in wireless communication (e.g., IEEE 802.11 over-the-air modulation techniques). This includes at least Wi-Fi (or Wireless Fidelity), WiMax, and Bluetooth^{™} wireless technologies, 3G, 4G, LTE wireless technologies, among Others. Thus, the communication can be a predefined structure as with a conventional network or simply an ad hoc communication between at least two devices. Wi-Fi networks use radio technologies called IEEE 802.11x (a, b, g, n, ac, ax, etc.) to provide secure, reliable, fast wireless connectivity. A Wi-Fi network can be used to connect computers to each Other, to the Internet, and to wired networks (which use IEEE 802.3-related media and functions).

Additionally, accelerator 1254 and/or vision processing unit 1256 can be coupled to chipset 1232 via I/F 1238. The accelerator 1254 is representative of any type of accelerator device (e.g., a data streaming accelerator, cryptographic accelerator, cryptographic coprocessor, an offload engine, etc.). One example of an accelerator 1254 is the Intel^{®} Data Streaming Accelerator (DSA). The accelerator 1254 may be a device including circuitry to accelerate copy operations, data encryption, hash value computation, data comparison operations (including comparison of data in memory 1216 and/or memory 1218), and/or data compression. For example, the accelerator 1254 may be a USB device, PCI device, PCIe device, CXL device, UCIe device, and/or an SPI device. The accelerator 1254 can also include circuitry arranged to execute machine learning (ML) related operations (e.g., training, inference, etc.) for ML models. Generally, the accelerator 1254 may be specially designed to perform computationally intensive operations, such as hash value computations, comparison operations, cryptographic operations, and/or compression operations, in a manner that is more efficient than when performed by the processor 1204 or processor 1206. Because the load of the system 1200 may include hash value computations, comparison operations, cryptographic operations, and/or compression operations, the accelerator 1254 can greatly increase performance of the system 1200 for these operations.

The accelerator 1254 may include one or more dedicated work queues and one or more shared work queues (each not pictured). Generally, a shared work queue is configured to store descriptors submitted by multiple software entities. The software may be any type of executable code, such as a process, a thread, an application, a virtual machine, a container, a microservice, etc., that share the accelerator 1254. For example, the accelerator 1254 may be shared according to the Single Root I/O virtualization (SR-IOV) architecture and/or the Scalable I/O virtualization (S-IOV) architecture. Embodiments are not limited in these contexts. In some embodiments, software uses an instruction to atomically submit the descriptor to the accelerator 1254 via a non-posted write (e.g., a deferred memory write (DMWr)). One example of an instruction that atomically submits a work descriptor to the shared work queue of the accelerator 1254 is the ENQCMD command or instruction (which may be referred to as "ENQCMD" herein) supported by the Intel^{®} Instruction Set Architecture (ISA). However, any instruction having a descriptor that includes indications of the operation to be performed, a source virtual address for the descriptor, a destination virtual address for a device-specific register of the shared work queue, virtual addresses of parameters, a virtual address of a completion record, and an identifier of an address space of the submitting process is representative of an instruction that atomically submits a work descriptor to the shared work queue of the accelerator 1254. The dedicated work queue may accept job submissions via commands such as the movdir64b instruction.

Various I/O devices 1260 and display 1252 couple to the bus 1272, along with a bus bridge 1258 which couples the bus 1272 to a second bus 1274 and an I/F 1240 that connects the bus 1272 with the chipset 1232. In one embodiment, the second bus 1274 may be a low pin count (LPC) bus. Various devices may couple to the second bus 1274 including, for example, a keyboard 1262, a mouse 1264 and communication devices 1266.

Furthermore, an audio I/O 1268 may couple to second bus 1274. Many of the I/O devices 1260 and communication devices 1266 may reside on the system-on-chip (SoC) 1202 while the keyboard 1262 and the mouse 1264 may be add-on peripherals. In other embodiments, some or all the I/O devices 1260 and communication devices 1266 are add-on peripherals and do not reside on the system-on-chip (SoC) 1202.

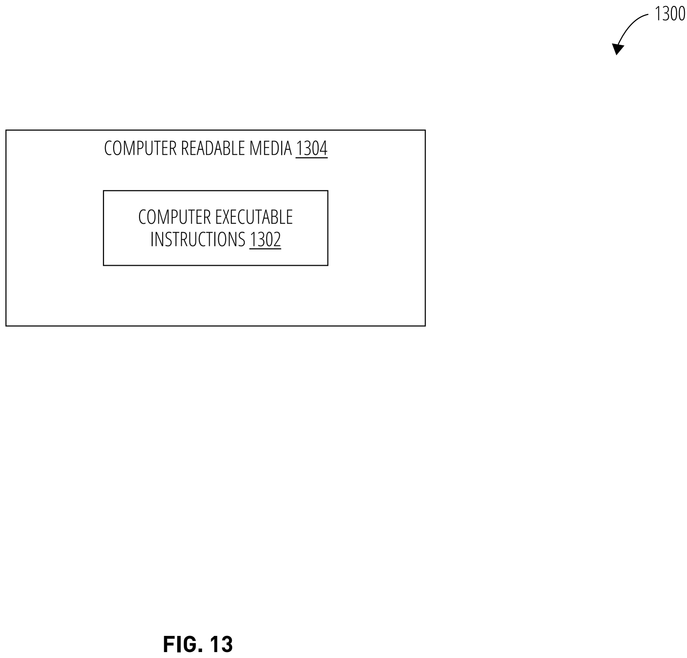

FIG. 13 illustrates computer readable storage medium 1300. Computer readable storage medium 1300 may comprise any non-transitory computer-readable storage medium or machine-readable storage medium, such as an optical, magnetic or semiconductor storage medium. In various embodiments, computer readable storage medium 1300 may comprise an article of manufacture. In some embodiments, computer readable storage medium 1300 may store computer executable instructions 1302 with which circuitry can execute. For example, computer executable instructions 1302 can include computer executable instructions 1302 to implement operations described with respect to logic flow 900 and/or logic flow 1000. Examples of computer readable storage medium 1300 or machine-readable storage medium 1300 may include any tangible media capable of storing electronic data, including volatile memory or non-volatile memory, removable or non-removable memory, erasable or non-erasable memory, writeable or re-writeable memory, and so forth. Examples of computer executable instructions 1302 may include any suitable type of code, such as source code, compiled code, interpreted code, executable code, static code, dynamic code, object-oriented code, visual code, and the like.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the exemplary devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

At least one computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Moreover, unless otherwise noted the features described above are recognized to be usable together in any combination. Thus, any features discussed separately may be employed in combination with each other unless it is noted that the features are incompatible with each other.

With general reference to notations and nomenclature used herein, the detailed descriptions herein may be presented in terms of program procedures executed on a computer or network of computers. These procedural descriptions and representations are used by those skilled in the art to most effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, the manipulations performed are often referred to in terms, such as adding or comparing, which are commonly associated with mental operations performed by a human operator. No such capability of a human operator is necessary, or desirable in most cases, in any of the operations described herein, which form part of one or more embodiments. Rather, the operations are machine operations. Useful machines for performing operations of various embodiments include general purpose digital computers or similar devices.

Some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Various embodiments also relate to apparatus or systems for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove convenient to construct more specialized apparatus to perform the required method steps. The required structure for a variety of these machines will appear from the description given.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit and scope of the appended claims.

The various elements of the devices as previously described with reference to FIGS. 1-13 may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

It will be appreciated that the exemplary devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

At least one computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Moreover, unless otherwise noted the features described above are recognized to be usable together in any combination. Thus, any features discussed separately may be employed in combination with each other unless it is noted that the features are incompatible with each other.

The following examples pertain to further embodiments, from which numerous permutations and configurations will be apparent.

### Example Set

In one example apparatus, includes an interface to a memory pool. The apparatus also includes processor circuitry for a memory controller operable to access an operational parameter for a network slice of a wireless network, determine a first memory region of a plurality of memory regions in the memory pool based on the operational parameter, and encode configuration information to allocate the first memory region to the network slice.

The apparatus of any previous example may also include where the network slice includes a logical network assigned a set of physical resource elements of a computer system, and the logical network includes a set of virtualized network functions (VNFs) of a core network of the wireless network.

The apparatus of any previous example may also include where the operational parameter is a memory reliability parameter, the first memory region is determined based on metadata for the first memory region, and the metadata represents a configuration associated with a number of error correction code (ECC) bits.

The apparatus of any previous example may also include a bus interface for a sideband bus, the processor circuitry for the memory controller to detect a memory event for the first memory region, generate an interrupt request for the memory event, and encode the interrupt request for transport to a memory microcontroller (MMC) over the sideband bus via the bus interface.

The apparatus of any previous example may also include the processor circuitry for the memory controller to decode a request for a set of error log files for the first memory region received from the MMC over the sideband bus via the bus interface, and encode a response with the set of error log files for transport over the sideband bus via the bus interface.

The apparatus of any previous example may also include the processor circuitry for the memory controller to decode data for a memory action for the first memory region received from the MMC over the sideband bus via the bus interface, and modify a metadata of the first memory region from a first configuration to a second configuration based on the data for the memory action, where the first configuration is associated with a first number of error correction code (ECC) bits and the second configuration is associated with a second number of ECC bits.

The apparatus of any previous example may also include the processor circuitry for the memory controller to decode data for a memory action for the first memory region received from the MMC over the sideband bus via the bus interface, determine a second memory region of the plurality of memory regions in the memory pool based on the data for the memory action, and encode configuration information to allocate the second memory region to the network slice for transport to the memory pool via the memory interface.

In one example method, includes accessing an operational parameter for a network slice of a wireless network, determining a first memory region of a plurality of memory regions in the memory pool based on the operational parameter, and encoding configuration information to allocate the first memory region to the network slice.

The method of any previous example may also include where the network slice includes a logical network assigned a set of physical resource elements of a computer system, and the logical network includes a set of virtualized network functions (VNFs) of a core network of the wireless network.

The method of any previous example may also include where the operational parameter is a memory reliability parameter, the first memory region is determined based on metadata for the first memory region, and the metadata represents a configuration associated with a number of error correction code (ECC) bits.

The method of any previous example may also include detecting a memory event for the first memory region, generating an interrupt request for the memory event, and encoding the interrupt request for transport to a memory microcontroller (MMC) over the sideband bus via the bus interface.

The method of any previous example may also include decoding a request for a set of error log files for the first memory region received from the MMC over the sideband bus via the bus interface, and encoding a response with the set of error log files for transport over the sideband bus via the bus interface.

The method of any previous example may also include decoding data for a memory action for the first memory region received from the MMC over the sideband bus via the bus interface, and modifying a metadata of the first memory region from a first configuration to a second configuration based on the data for the memory action, where the first configuration is associated with a first number of error correction code (ECC) bits and the second configuration is associated with a second number of ECC bits.

The method of any previous example may also include decoding data for a memory action for the first memory region received from the MMC over the sideband bus via the bus interface, determining a second memory region of the plurality of memory regions in the memory pool based on the data for the memory action, and encoding configuration information to allocate the second memory region to the network slice for transport to the memory pool via the memory interface.

In one example machine-readable non-transitory storage including machine-readable instructions, when executed, to perform access an operational parameter for a network slice of a wireless network, determine a first memory region of a plurality of memory regions in the memory pool based on the operational parameter, and encode configuration information to allocate the first memory region to the network slice.

The machine-readable non-transitory storage of any previous example may also include where the network slice includes a logical network assigned a set of physical resource elements of a computer system, and the logical network includes a set of virtualized network functions (VNFs) of a core network of the wireless network.

The machine-readable non-transitory storage of any previous example may also include where the operational parameter is a memory reliability parameter, the first memory region is determined based on metadata for the first memory region, and the metadata represents a configuration associated with a number of error correction code (ECC) bits.

The machine-readable non-transitory storage of any previous example may also include to perform detect a memory event for the first memory region, generate an interrupt request for the memory event, and encode the interrupt request for transport to a memory microcontroller (MMC) over the sideband bus via the bus interface.

The machine-readable non-transitory storage of any previous example may also include to perform decode data for a memory action for the first memory region received from the MMC over the sideband bus via the bus interface, and modify a metadata of the first memory region from a first configuration to a second configuration based on the data for the memory action, where the first configuration is associated with a first number of error correction code (ECC) bits and the second configuration is associated with a second number of ECC bits.

The machine-readable non-transitory storage of any previous example may also include to perform decode data for a memory action for the first memory region received from the MMC over the sideband bus via the bus interface, determine a second memory region of the plurality of memory regions in the memory pool based on the data for the memory action, and encode configuration information to allocate the second memory region to the network slice for transport to the memory pool via the memory interface.

An example apparatus may comprise a bus interface for a sideband bus; and processor circuitry for a memory microcontroller (MMC) operable to: decode an interrupt request for a memory event for a memory region allocated to a network slice of a wireless network received from a memory controller over the sideband bus via the bus interface; coalesce the memory event with a set of memory events for the memory region; analyze the set of memory events for the memory region for a shared memory event; generate data for a memory action for the memory region; and encode the data for the memory action for transport over the sideband bus via the bus interface.

The apparatus of any previous example, the processor circuitry for the MMC to: encode a request for a set of error log files for transport to the memory controller over the sideband bus via the bus interface; decode a response with the set of error log files received from the memory controller over the sideband bus via the bus interface; and retrieve the set of memory events for the memory region from the set of error log files.

The apparatus of any previous example, the processor circuitry for the MMC to analyze the set of memory events for the memory region for the shared memory event using a machine learning (ML) model.

An example method may comprise decoding an interrupt request for a memory event for a memory region allocated to a network slice of a wireless network received from a memory controller over the sideband bus via the bus interface; coalescing the memory event with a set of memory events for the memory region; analyzing the set of memory events for the memory region for a shared memory event; generating data for a memory action for the memory region; and encoding the data for the memory action for transport over the sideband bus via the bus interface.

The method of any previous example, comprising encoding a request for a set of error log files for transport to the memory controller over the sideband bus via the bus interface; decode a response with the set of error log files received from the memory controller over the sideband bus via the bus interface; and retrieve the set of memory events for the memory region from the set of error log files.

The method of any previous example, comprising analyzing the set of memory events for the memory region for the shared memory event using a machine learning (ML) model.

An example machine-readable medium may comprise decode an interrupt request for a memory event for a memory region allocated to a network slice of a wireless network received from a memory controller over the sideband bus via the bus interface; coalesce the memory event with a set of memory events for the memory region; analyze the set of memory events for the memory region for a shared memory event; generate data for a memory action for the memory region; and encode the data for the memory action for transport over the sideband bus via the bus interface.

The machine-readable medium of any previous example, comprising encode a request for a set of error log files for transport to the memory controller over the sideband bus via the bus interface; decode a response with the set of error log files received from the memory controller over the sideband bus via the bus interface; and retrieve the set of memory events for the memory region from the set of error log files.

The machine-readable medium of any previous example, comprising analyze the set of memory events for the memory region for the shared memory event using a machine learning (ML) model.

An example apparatus may comprise means for decoding an interrupt request for a memory event for a memory region allocated to a network slice of a wireless network received from a memory controller over the sideband bus via the bus interface; means for coalescing the memory event with a set of memory events for the memory region; means for analyzing the set of memory events for the memory region for a shared memory event; means for generating data for a memory action for the memory region; and means for encoding the data for the memory action for transport over the sideband bus via the bus interface.

An example apparatus may comprise means for accessing an operational parameter for a network slice of a wireless network, means for determining a first memory region of a plurality of memory regions in the memory pool based on the operational parameter, and means for encoding configuration information to allocate the first memory region to the network slice.

Other technical features may be readily apparent to one skilled in the art from the following figures, descriptions, and claims.

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to providing a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any Other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each Other but still cooperate or interact with each Other, and/or may mean that one or more other elements are coupled or connected between the elements that are said to be coupled with each Other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration*.

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

## Claims

1. An apparatus for intelligent resource management, comprising:
a memory interface to a memory pool; and
processor circuitry for a memory controller operable to:
access an operational parameter for a network slice of a wireless network;
determine a first memory region of a plurality of memory regions in the memory pool based on the operational parameter; and
encode configuration information to allocate the first memory region to the network slice.

2. The apparatus of claim 1, wherein the network slice comprises a logical network assigned a set of physical resource elements of a computer system, and the logical network comprises a set of virtualized network functions (VNFs) of a core network of the wireless network.

3. The apparatus of claim 1 or 2, wherein the operational parameter is a memory reliability parameter, the first memory region is determined based on metadata for the first memory region, and the metadata represents a configuration associated with a number of error correction code (ECC) bits.

4. The apparatus of any of claims 1 to 3, comprising a bus interface for a sideband bus, the processor circuitry for the memory controller to:
detect a memory event for the first memory region;
generate an interrupt request for the memory event; and
encode the interrupt request for transport to a memory microcontroller (MMC) over the sideband bus via the bus interface.

5. The apparatus of claim 4, the processor circuitry for the memory controller to:
decode data for a memory action for the first memory region received from the MMC over the sideband bus via the bus interface; and
modify a metadata of the first memory region from a first configuration to a second configuration based on the data for the memory action, wherein the first configuration is associated with a first number of error correction code (ECC) bits and the second configuration is associated with a second number of ECC bits.

6. The apparatus of claim 4 or 5, the processor circuitry for the memory controller to:
decode data for a memory action for the first memory region received from the MMC over the sideband bus via the bus;
determine a second memory region of the plurality of memory regions in the memory pool based on the data for the memory action; and
encode configuration information to allocate the second memory region to the network slice for transport to the memory pool via the memory interface.

7. The apparatus of any of claims 4 to 6, the processor circuitry for the memory controller to:
decode a request for a set of error log files for the first memory region received from the MMC over the sideband bus via the bus interface; and
encode a response with the set of error log files for transport over the sideband bus via the bus interface.

8. A method for intelligent resource management, comprising:
accessing an operational parameter for a network slice of a wireless network;
determining a first memory region of a plurality of memory regions in a memory pool based on the operational parameter; and
encoding configuration information to allocate the first memory region to the network slice.

9. The method of claim 8, wherein the network slice comprises a logical network assigned a set of physical resource elements of a computer system, and the logical network comprises a set of virtualized network functions (VNFs) of a core network of the wireless network.

10. The method of claim 8 or 9, wherein the operational parameter is a memory reliability parameter, the first memory region is determined based on metadata for the first memory region, and the metadata represents a configuration associated with a number of error correction code (ECC) bits.

11. The method of any of claims 8 to 10, comprising:
detecting a memory event for the first memory region;
generating an interrupt request for the memory event; and
encoding the interrupt request for transport to a memory microcontroller (MMC) over a sideband bus via a bus interface.

12. The method of claim 11, comprising:
decoding data for a memory action for the first memory region received from the MMC over the sideband bus via the bus interface; and
modifying a metadata of the first memory region from a first configuration to a second configuration based on the data for the memory action, wherein the first configuration is associated with a first number of error correction code (ECC) bits and the second configuration is associated with a second number of ECC bits.

13. The method of claim 11 or 12, comprising:
decoding data for a memory action for the first memory region received from the MMC over the sideband bus via the bus interface;
determining a second memory region of the plurality of memory regions in the memory pool based on the data for the memory action; and
encoding configuration information to allocate the second memory region to the network slice for transport to the memory pool via a memory interface.

14. An apparatus comprising means to perform a method as claimed in any preceding claim.

15. Machine-readable storage including machine-readable instructions, when executed, to implement a method or realize an apparatus as claimed in any preceding claim.
